(19) Europäisches Patentamt
European Patent Office
Office européen des brevets

(11) **EP 4 046 150 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **20816097.8**

(22) Anmeldetag: **10.11.2020**

(51) Internationale Patentklassifikation (IPC):
**G08G 1/0967** (2006.01)   **G08G 1/01** (2006.01)
**G06N 3/04** (2023.01)   **G06N 3/08** (2023.01)
**G06N 3/045** (2023.01)   G06N 3/084 (2023.01)

(52) Gemeinsame Patentklassifikation (CPC):
**G08G 1/0129; G06N 3/045; G08G 1/0116; G08G 1/0141; G08G 1/096775;** G06N 3/084

(86) Internationale Anmeldenummer:
**PCT/EP2020/081561**

(87) Internationale Veröffentlichungsnummer:
**WO 2021/110370 (10.06.2021 Gazette 2021/23)**

(54) **VERFAHREN UND ANORDNUNG ZUR VORHERSAGE VON SCHALTZEITPUNKTEN EINER SIGNALGRUPPE EINER SIGNALANLAGE ZUR STEUERUNG EINES VERKEHRSFLUSSES**

METHOD AND ARRANGEMENT FOR PREDICTING SWITCHING TIMES OF A SIGNAL GROUP OF A SIGNAL SYSTEM FOR CONTROLLING TRAFFIC FLOW

PROCÉDÉ ET AGENCEMENT POUR PRÉDIRE DES TEMPS DE COMMUTATION D'UN GROUPE DE SIGNAUX D'UN SYSTÈME DE SIGNAL POUR COMMANDER UN ÉCOULEMENT DE TRAFIC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2019   DE 102019218903**

(43) Veröffentlichungstag der Anmeldung:
**24.08.2022   Patentblatt 2022/34**

(73) Patentinhaber: **Yunex GmbH**
**81739 München (DE)**

(72) Erfinder:
- **TOKIC, Michel**
  **88069 Tettnang (DE)**
- **WEBER, Marc Christian**
  **80339 München (DE)**
- **FRANK, Harald**
  **85635 Höhenkirchen-Siegertsbr (DE)**

(74) Vertreter: **Patentanwaltskanzlei WILHELM & BECK**
**Prinzenstraße 13**
**80639 München (DE)**

(56) Entgegenhaltungen:
**DE-A1-102005 023 742     DE-A1-102017 213 350**

- **YANG ZHANG ET AL: "Missing traffic flow data prediction using least squares support vector machines in urban arterial streets", COMPUTATIONAL INTELLIGENCE AND DATA MINING, 2009. CIDM '09. IEEE SYMPOSIUM ON, IEEE, PISCATAWAY, NJ, USA, 30. März 2009 (2009-03-30), Seiten 76-83, XP031456519, ISBN: 978-1-4244-2765-9**
- **MOU LUNTIAN ET AL: "T-LSTM: A Long Short-Term Memory Neural Network Enhanced by Temporal Information for Traffic Flow Prediction", IEEE ACCESS, Bd. 7, 6. August 2019 (2019-08-06), Seiten 98053-98060, XP011738042, DOI: 10.1109/ACCESS.2019.2929692 [gefunden am 2019-08-01]**

**Beschreibung**

Im Stand der Technik ist es bekannt, Signalanlagen mit Signalgruppen an Straßenkreuzungen vorzusehen, um einen Verkehr über die Kreuzung zu steuern. Die Signalanlagen werden dazu von einem Steuerprogramm angesteuert, das einen Signalzustand der Signalgruppen festlegt.

Aus dem Dokument "Verkehrsdatenanalyse in Sitraffic Scala/Concert, Das Expertensystem für Visualisierung, Qualitätsmanagement und Statistik", erhältlich im Internet am 24.09.2019 unter https://www.mobility.siemens.com/mobility/ global/SiteCollectionDocuments/de/ road-Solutions/urban/ traffic-control-center/verkehrsdatenanalyse .pdf, sind unter schiedliche Arten verkehrstechnischer Ausrüstung an Straßenkreuzungen bekannt. Neben Signalanlagen, die den Verkehr regeln, kommen Detektorsysteme zum Einsatz, die das Verkehrs aufkommen messen. Im Rahmen einer zugehörigen Datenverarbeitung werden unter anderem ÖV-Telegramme, die exakten Signalisierungszustände der Signalanlagen sowie Detektordaten erfasst.

Aus der Druckschrift YANG ZHANG et al.: "Missing traffic flow data prediction using least squares support vector machines in urban arterial streets" COMPUTATIONAL INTELLIGENCE AND DATA MINING, 2009. CIDM '09. IEEE SYMPOSIUM ON, IEEE,PISCATA-WAY, NJ, USA, 30.März 2009)2009-03-30), Seiten 76-83, X031456519, ISBN: 978-1-4244-2765-9 ist ein Verfahren zum Vorhersagen von Verkehrsflussdaten mit Hilfe von künstlicher Intelligenz bekannt.

Aus der Druckschrift MOU LUNTIAN et al.: "T-LSTM: A Long Short-term Memory Neural Network Enhanced by Temporal Information for Traffic Flow Prediction", IEEE ACCESS, Bd. 7, Seiten 98053-98060, XP011738042, DOI:10.1109/ACCESS,2019.2929692 ist ein Neuronales Netz für die Vorhersage von Verkehrsflussdaten bekannt.

Aus der Druckschrift DE 10 2005 023742 A1 ist ein Verfahren zur Koordination konkurrierender Prozesse oder zur Steuerung des Transports von mobilen Einheiten innerhalb eines Netzwerkes bekannt.

Das Dokument "Sitraffic ESCoS, Das kooperative Verkehrssystem für die digitale Straße", erhältlich im Internet am 24.09.2019 unterhttps://assets.new.Siemens.com/siemens/assets/api/uuid:c69aee 219197d72829174a2a8071fe51c 6bf89a4/Version:1499954508/sitraffic-escos-de.pdf, offenbart einen Echtzeit-Datenaustausch zwischen Fahrzeugen und einer Verkehrsinfrastruktur mittels sog. Road-Side-Units und Zentralenmodulen. Einerseits erhalten die Fahrzeuge von den Road-Side-Units Echtzeit-Informationen etwa zu Rot-/Grünphasen von Signalanlagen, andererseits fungieren die Fahrzeuge als mobile Verkehrsdetektoren, deren Informationen in den Zentralenmodulen zusammengeführt werden. Bei den

Road-Side-Units handelt es sich um WLAN-basierte Funkmodule, die beispielsweise an Schilderbrücken und Signalanlagen montiert sind und sowohl als Sender und Empfänger arbeiten. Als Empfänger verarbeiten die Road-Side-Units nicht nur Statusmeldungen von Fahrzeugen, welche beispielsweise zehn Mal pro Sekunde im Rahmen einer Car-to-Infrastructure-Kommunikation bereitgestellt werden, sondern auch Daten von Umweltdetektoren, Verkehrssteuergeräten sowie -zentralen. Die Kommunikation zwischen den Road-Side-Units und den Zentralenmodulen erfolgt per Funk oder über bestehende Kabelnetze.

Generell werden in Verkehrsnetzen auch ÖV-Telegramme verarbeitet. Häufig werden ÖV-Telegramme von Fahrzeugen des öffentlichen Nahverkehrs ausgesendet. In diesem Fall enthalten die ÖV-Telegramme beispielsweise Datum, Uhrzeit, eine Liniennummer sowie eine Fahrplanabweichung. Die ÖV-Telegramme werden beispielsweise von Signalanlagen empfangen, vor Ort ausgewertet und für eine übergeordnete Auswertung an eine Zentrale weitergeleitet.

Im Rahmen dieser Verkehrsnetze besteht der Wunsch, Schaltzeitpunkte von Signalanlagen vorherzusagen, also beispielsweise die verbleibende Restdauer einer Grün- oder Rotphase, oder zukünftige Grünphasen mehrerer Signalanlagen entlang eines geplanten Fahrtwegs eines Fahrzeugs. Derartige Prognosen lassen sich aus Zeitreihendaten der betroffenen Signalanlagen sowie weiterer Informationsquellen ableiten. So beschreibt die DE 10 2017 213 350 A1 ein Verfahren zur Vorhersage von Schaltzeitpunkten einer Signalgruppe einer Signalanlage zur Steuerung eines Verkehrsflusses, bei dem

reale Zustandsinformationen, welche die Schaltzeitpunkte der Signalgruppe beeinflussen, in einem festen Zeittakt empfangen werden, und eine Recheneinheit in dem festen Zeittakt mithilfe einer künstlichen Intelligenz, welcher die realen Zustandsinformationen zugeführt werden, mindestens einen Schaltzeitpunkt der Signalgruppe vorhersagt.

Dabei besteht jedoch das Problem, dass die für eine Prognose in Echtzeit benötigten Zeitreihendaten nicht immer rechtzeitig eintreffen.

Existierende Lösungen zum Auffüllen von Datenlücken in Zeitreihen treffen einfache Annahmen über den zeitlichen Kontext der übermittelten Information. Bekannt ist, Lücken in Zeitreihendaten solange mit dem zuletzt erhaltenen Informationswert aufzufüllen, bis der Verbindungsabbruch behoben ist. Alternativ ist bekannt, den zum Auffüllen verwendeten Wert durch Aggregation über einen längeren vergangenen Zeithorizont zu bilden, beispielsweise als Mittelwert über die zuletzt erhaltenen zehn Sekunden der empfangenen Daten.

Die Aufgabe der Erfindung besteht darin, ein verbessertes Verfahren und eine verbesserte Anordnung zur Vorhersage von Schaltzeitpunkten einer Signalgruppe einer Signalanlage bereitzustellen.

Die Aufgabe der Erfindung wird durch die unabhängigen Patentansprüche gelöst.

**EP 4 046 150 B1**

Bei dem Verfahren zur Vorhersage von Schaltzeitpunkten einer Signalgruppe einer Signalanlage zur Steuerung eines Verkehrsflusses, werden reale Zustandsinformationen, welche die Schaltzeitpunkte der Signalgruppe beeinflussen, in einem festen Zeittakt empfangen. Eine Recheneinheit sagt in dem festen Zeittakt mithilfe einer künstlichen Intelligenz, welcher die realen Zustandsinformationen zugeführt werden, mindestens einen Schaltzeitpunkt der Signalgruppe vorher. Das Verfahren ist dadurch gekennzeichnet, dass die realen Zustandsinformationen einem ersten neuronalen Netz als Eingangssignale zugeführt werden. Das erste neuronale Netz berechnet als Ersatz für reale Zustandsinformationen oder Bestandteile der realen Zustandsinformationen, welche für einen aktuellen Zeitpunkt nicht rechtzeitig oder fehlerhaft in dem festen Zeittakt empfangen werden, geschätzte Zustandsinformationen. Das erste neuronale Netz gibt die geschätzten Zustandsinformationen für den aktuellen Zeitpunkt in dem festen Zeittakt an die künstliche Intelligenz aus, wobei die geschätzten Zustandsinformationen die realen Zustandsinformationen oder die Bestandteile der realen Zustandsinformationen ersetzen, welche nicht rechtzeitig oder fehlerhaft empfangen wurden.

Alternativ ist das Verfahren dadurch gekennzeichnet, dass die künstliche Intelligenz ein drittes neuronales Netz ist, welchem die realen Zustandsinformationen als Eingangssignale zugeführt werden. Das dritte neuronale Netz berechnet als Ersatz für reale Zustandsinformationen oder Bestandteile der realen Zustandsinformationen, welche für einen aktuellen Zeitpunkt nicht rechtzeitig oder fehlerhaft in dem festen Zeittakt empfangen werden, geschätzte Zustandsinformationen. Das dritte neuronale Netz verwendet die geschätzten Zustandsinformationen für den aktuellen Zeitpunkt in dem festen Zeittakt, um den mindestens einen Schaltzeitpunkt der Signalgruppe vorherzusagen, wobei die geschätzten Zustandsinformationen die realen Zustandsinformationen oder die Bestandteile der realen Zustandsinformationen ersetzen, welche nicht rechtzeitig oder fehlerhaft empfangen wurden.

Die Anordnung zur Vorhersage von Schaltzeitpunkten einer Signalgruppe einer Signalanlage zur Steuerung eines Verkehrsflusses, weist eine Schnittstelle auf, welche eingerichtet ist zum Empfang realer Zustandsinformationen, welche die Schaltzeitpunkte der Signalgruppe beeinflussen, in einem festen Zeittakt. Sie beinhaltet ferner eine Recheneinheit, welche eingerichtet ist zur Vorsage mindestens eines Schaltzeitpunkts der Signalgruppe in dem festen Zeittakt mithilfe einer künstlichen Intelligenz, welcher die realen Zustandsinformationen zugeführt werden. Die Anordnung ist gekennzeichnet, durch ein erstes neuronales Netz, welchem die realen Zustandsinformationen als Eingangssignale zugeführt werden. Das erste neuronale Netz ist eingerichtet, als Ersatz für reale Zustandsinformationen oder Bestandteile der realen Zustandsinformationen, welche für einen aktuellen Zeitpunkt nicht rechtzeitig oder fehlerhaft in dem festen Zeittakt empfangen werden, geschätzte Zustandsinformationen zu berechnen. Die Anordnung ist eingerichtet, die geschätzten Zustandsinformationen für den aktuellen Zeitpunkt in dem festen Zeittakt an die künstliche Intelligenz auszugeben, wobei die geschätzten Zustandsinformationen die realen Zustandsinformationen oder die Bestandteile der realen Zustandsinformationen ersetzen, welche nicht rechtzeitig oder fehlerhaft empfangen wurden.

Alternativ ist die Anordnung gekennzeichnet durch ein drittes neuronales Netz, welches die künstliche Intelligenz implementiert und welchem die realen Zustandsinformationen als Eingangssignale zugeführt werden. Das dritte neuronale Netz ist eingerichtet, als Ersatz für reale Zustandsinformationen oder Bestandteile der realen Zustandsinformationen, welche für einen aktuellen Zeitpunkt nicht rechtzeitig oder fehlerhaft in dem festen Zeittakt empfangen werden, geschätzte Zustandsinformationen zu berechnen. Das dritte neuronale Netz ist eingerichtet, die geschätzten Zustandsinformationen für den aktuellen Zeitpunkt zur Vorsage des mindestens einen Schaltzeitpunkts der Signalgruppe in dem festen Zeittakt zu verwenden, wobei die geschätzten Zustandsinformationen die realen Zustandsinformationen oder die Bestandteile der realen Zustandsinformationen ersetzen, welche nicht rechtzeitig oder fehlerhaft empfangen wurden.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Der Schaltzeitpunkt ist der Zeitpunkt, an dem die Signalgruppe von einem Signalzustand in einen zeitlich folgenden Signalzustand umschaltet.

Beispielsweise werden die realen Zustandsinformationen für den aktuellen Zeitpunkt unvollständig in dem festen Zeittakt empfangen. Das erste neuronale Netz ersetzt fehlende Bestandteile der realen Zustandsinformationen durch entsprechende Bestandteile der geschätzten Zustandsinformationen für den aktuellen Zeitpunkt und gibt diese an die künstliche Intelligenz aus. Hierzu werden die Zustandsinformationen für den aktuellen Zeitpunkt beispielsweise in einem externen Zustandsvektor zusammengefasst. Fehlende Bestandteile der realen Zustandsinformationen können nun ersetzt werden, indem die entsprechenden Komponenten des Zustandsvektors durch geschätzte Zustandsinformationen bzw. deren Bestandteile ersetzt werden, welche das erste neuronale Netz berechnet hat.

Der Verkehrsfluss, welcher durch die Signalanlage gesteuert wird, ist beispielsweise ein Verkehrsfluss im Straßenverkehr. Grundsätzlich können durch die Signalanlage jedoch beliebige Verkehrsflüsse gesteuert werden, beispielsweise im Schienenverkehr, in der Schifffahrt oder im Luftverkehr, sowie an Knotenpunkten zwischen mehreren dieser Kategorien.

Aufgabe der künstlichen Intelligenz ist es beispielsweise, die verbleibende Zeit bis zu den nächsten Schaltzeitpunkten aller Signalanlagen innerhalb eines Stadtteils zu berechnen. Zusätzlich kann die künstliche Intelligenz auch

3

eine Wahrscheinlichkeitsaussage über die zukünftigen Zustände der Signalanlagen (beispielsweise deren Rot/Grünzustand) treffen. Eine derartige künstliche Intelligenz ist beispielsweise aus der DE 10 2017 213 350 A1 bekannt.

Bei dem ersten neuronalen Netz handelt es sich nicht um die künstliche Intelligenz selbst. Diese wiederum kann jedoch ihrerseits als neuronales Netz ausgebildet sein, insbesondere als rekurrentes neuronales Netzwerk. Mit diesen Netzwerken wurden gute Ergebnisse bei der Vorhersage der Schaltzeitpunkte zwischen den Signalzuständen einer Signalgruppe einer Signalanlage erreicht. Das erste neuronale Netz und die künstliche Intelligenz können auf der gleichen Recheneinheit oder auf unterschiedlichen Recheneinheiten ausgeführt werden, welche sich am gleichen Ort oder an unterschiedlichen Orten befinden.

Der feste Zeittakt ist beispielsweise so ausgelegt, dass die Zustandsinformationen der künstlichen Intelligenz einmal pro Sekunde zugeführt werden. Alternativ können die Zustandsinformationen beispielsweise auch nach jeder Zehntelsekunde oder alle zwei Sekunden bereitgestellt werden.

Das erste neuronale Netz erlaubt es der künstlichen Intelligenz, auch dann gute Vorhersagen für die Schaltzeitpunkte der Signalgruppen der Signalanlage zu treffen, wenn eine der vielen beteiligten Kommunikationsstrecken ausfällt oder überlastet ist. Somit wird die Prognosequalität und -verfügbarkeit durch das erste neuronale Netz erheblich erhöht, da der künstlichen Intelligenz mit den geschätzten Zustandsinformationen des ersten neuronalen Netzes ein geschätzter Systemzustand zugeführt wird, anstatt so lange zu warten, bis die realen Zustandsinformationen schlussendlich an der künstlichen Intelligenz eingetroffen sind. Die Prognose von Signalgruppenzuständen ist somit auf festem Zeittakt in Echtzeit mit hoher Robustheit und Toleranz gegenüber Lücken im Zeittakt der bereitgestellten realen Zustandsinformationen möglich.

Das erste neuronale Netz und die künstliche Intelligenz befinden sich beispielsweise neben einer Steuereinheit der Signalanlage, in einer Road-Side-Unit, in einem Fahrzeug, oder in einer Cloud. Hierzu kann beispielsweise ein geeignetes Modul neben der Steuereinheit oder in der Road-Side-Unit montiert und entsprechend eingerichtet sein. Dieses Modul kann nur die künstliche Intelligenz oder auch zusätzlich das erste neuronale Netz enthalten. Selbstverständlich können auch mehrere künstliche Intelligenzen an unterschiedlichen Orten zum Einsatz kommen.

Vorteilhafterweise wird das erste neuronale Netz unmittelbar bei der künstlichen Intelligenz betrieben, sodass es zwischen dem ersten neuronalen Netz und der künstlichen Intelligenz nicht zu Kommunikationsausfällen oder -verzögerungen kommen kann. Insbesondere können die Funktionen des ersten neuronalen Netzes und der künstlichen Intelligenz auch in einem dritten neuronalen Netz zusammengefasst werden, welches dann das erste neuronale Netz und die künstliche Intelligenz ersetzt.

Mithilfe des vorgeschlagenen Verfahrens ist es möglich, eine genauere Information über eine Restzeit des gerade vorliegenden Signalzustandes der Signalanlage zu erhalten. Die Information über den Schaltzeitpunkt beziehungsweise die Restzeit für den vorliegenden Signalzustand der Signalgruppe kann angezeigt oder zu Fahrzeugen übertragen werden. Somit ist es möglich, dass Fahrzeuge die Information über den Schaltzeitpunkt bzw. die Restzeit eines aktuellen Signalzustandes bei der Annäherung an die Signalgruppe berücksichtigen und beispielsweise eine Geschwindigkeitsanpassung in der Weise vornehmen, dass das Fahrzeug mit möglichst wenig Wartezeit an der Signalgruppe die Kreuzung beziehungsweise die Signalanlage passieren kann. Weiterhin kann ein Energieverbrauch der Fahrzeuge reduziert werden.

Die Vorhersage des Schaltzeitpunktes kann für eine Signalgruppe einer Signalanlage oder für mehrere Signalgruppen der Signalanlage durchgeführt werden. Insbesondere kann die Prognose der Schaltzeitpunkte für alle Signalgruppen der Signalanlage, d.h. für alle Signalgruppen einer Lichtsignalanlage an einer Kreuzung durchgeführt werden.

Beispielsweise wird die Prognose für den Schaltzeitpunkt bzw. die Schaltzeitpunkte zwischen zwei Signalzuständen für einen festgelegten zukünftigen Zeitraum, insbesondere für 30 Sekunden oder bis 120 Sekunden oder länger durchgeführt. Dabei können auch mehrere Wechsel von Signalzuständen und damit mehrere Schaltzeiten zwischen zwei aufeinander folgende Signalzustände prognostiziert werden. Somit können nicht nur der nächste Schaltzeitpunkt, sondern mehrere zukünftige Schaltzeitpunkte zwischen Signalzuständen ermittelt werden. Dadurch wird eine längerfristige Prognose für das Schaltverhalten der Signalgruppe der Signalanlage ermöglicht.

Eine weitere Verbesserung der künstlichen Intelligenz besteht darin, dass zusätzlich zum Schaltzeitpunkt beziehungsweise zur Restzeit des vorliegenden Signalzustandes eine Wahrscheinlichkeit für die Restzeit des vorliegenden Signalzustandes ermittelt wird. Mithilfe der Wahrscheinlichkeit kann ein Fahrer oder ein Fahrzeug die Verlässlichkeit der prognostizierten Restzeit des Signalzustandes bewerten und somit eine präzisere Information über das zukünftige Schaltverhalten der Signalgruppe erhalten. Beispielsweise wird für ein grünes Signal einer Signalgruppe eine Wahrscheinlichkeit für das Auftreten des grünen Signals ermittelt. Die Wahrscheinlichkeit für die Signalzustände, d.h. beispielsweise die Wahrscheinlichkeit für ein grünes Signal der Signalgruppe kann für einen vorgegebenen zeitlichen Prognosehorizont in die Zukunft, beispielsweise für 120 Sekunden oder länger, vorausberechnet werden.

Die Vorhersagen der künstlichen Intelligenz können wiederum an Fahrzeuge kommuniziert werden, welche diese zur Energieeinsparung durch Optimierung der Fahrgeschwindigkeit nutzen. Grundsätzlich ist es auch möglich, die künstliche Intelligenz im Fahrzeug anzuordnen, sodass das Fahrzeug selbst die Rot- und Grünzeiten aller Signalanlagen entlang seines Fahrtwegs vorhersagen kann. Auch in diesem Anwendungsszenario erlaubt das erste neuronale Netz eine robustere Vorhersage von Schaltphasen bei lückenhaften Zeitreihendaten.

Gegenüber den eingangs erläuterten Methoden zum Auffüllen von lückenhaften Zeitreihendaten bietet das erste neuronale Netz den Vorteil, dass auch spontane Änderungen in der Restlaufzeit der Signalgruppen der Signalanlage vorhergesagt werden können, indem das erste neuronale Netz geeignet trainiert wird, um die Lücken in den Zeitreihendaten möglichst aussagekräftig aufzufüllen. Das erste neuronale Netz füllt die Lücken intelligent und vorausschauend, und ist auch in der Lage, sprunghafte Änderungen zu erlernen. Hierdurch wird die Prognose wesentlich aussagekräftiger, als wenn Lücken in den Zeitreihendaten lediglich mit den zuletzt empfangenen Werten aufgefüllt werden, da in diesem Fall Umschaltungen der Signalgruppen sowie zu erwartende Detektor-Auslösungen nicht in den aufgefüllten Zustandsinformationen repräsentiert werden.

Das erste neuronale Netz bietet jedoch nicht nur im laufenden Betrieb der künstlichen Intelligenz, sondern auch bei einem Training der künstlichen Intelligenz Vorteile. Denn mithilfe des ersten neuronalen Netzes kann die künstliche Intelligenz genauere und stabilere Modelle zur Prognose der Schaltzeitpunkte erlernen. Diese Prognosemodelle können auch in Umgebungen mit unzuverlässiger Sensorik oder Problemen bei der Datenübertragung genutzt werden.

Die vorherigen Ausführungen gelten analog für das dritte neuronale Netz, welches die Funktionen des ersten neuronalen Netzes und der künstlichen Intelligenz bzw. des zweiten neuronalen Netzes vereint.

Gemäß einer Ausführungsform enthalten die realen Zustandsinformationen Signalgruppen-Zustände, insbesondere von der Signalanlage und/oder von mehreren oder allen Signalanlagen in einem Gebiet, System-Zustände, insbesondere von einer Steuereinheit der Signalanlage und/oder von Steuereinheiten von mehreren oder allen Signalanlagen in einem Gebiet, Detektor-Werte, insbesondere von der Signalanlage und/oder von mehreren oder allen Signalanlagen in einem Gebiet, und/oder Nachrichten von Fahrzeugen, insbesondere Meldungen und/oder Anforderungen von öffentlichen Transportmitteln, insbesondere ÖV-Telegramme.

Die System-Zustände beinhalten beispielsweise eine aktuelle Zeit und/oder Informationen zum aktuellen Wochentag, Kalendertag oder Feiertag, eine Information über ein Steuerprogramm, das die Signalanlage steuert, insbesondere eine Zykluszeit und/oder eine Umlaufzeit, eine Information, ob es sich um eine zentrale Steuerung für mehrere Signalanlagen oder um eine lokale Steuerung handelt, und/oder ob eine Festzeitsteuerung oder eine verkehrsabhängige Steuerung vorliegt.

Die realen Zustandsinformationen bilden beispielsweise den Systemzustand eines Steuergerätes der Signalanlage ab. Von Vorteil ist es jedoch, zur Prognose der Restzeit und der zukünftigen Rot/Grünzustände der Signalanlage vergangene und aktuelle Zustände aller umliegenden Signalanlagen sowie aller sich in der Nähe befindenden Verkehrsteilnehmer zu berücksichtigen. In diesem Fall können die realen Zustandsinformationen also auch Zustände der umliegenden Signalanlagen sowie der sich in der Nähe befindenden Fahrzeugen enthalten.

In einer Weiterbildung ist das erste neuronale Netz ein historisch konsistentes neuronales Netz, welches in dem festen Zeittakt fortlaufend die geschätzten Zustandsinformationen für den aktuellen Zeitpunkt berechnet.

Das historisch konsistente neuronale Netz (englisch "Closed Historically Consistent Neural Network", HCNN) berechnet also fortlaufend im festen Zeittakt mit den geschätzten Zustandsinformationen eine Schätzung des aktuellen Systemzustands, welche als Eingabe für die künstliche Intelligenz zur Berechnung der Schaltzeitpunkte der Signalanlage genutzt werden kann.

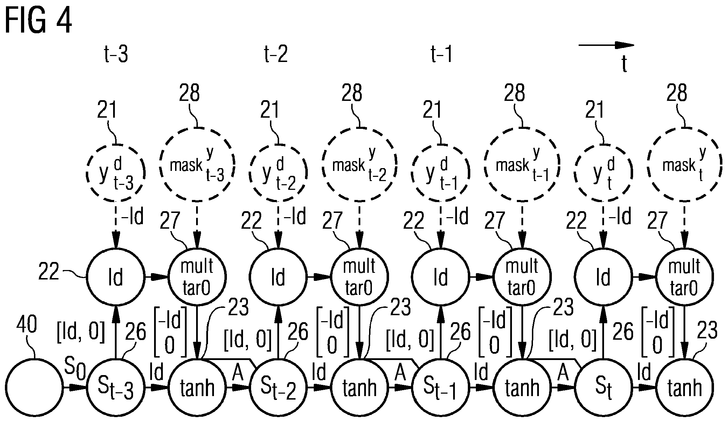

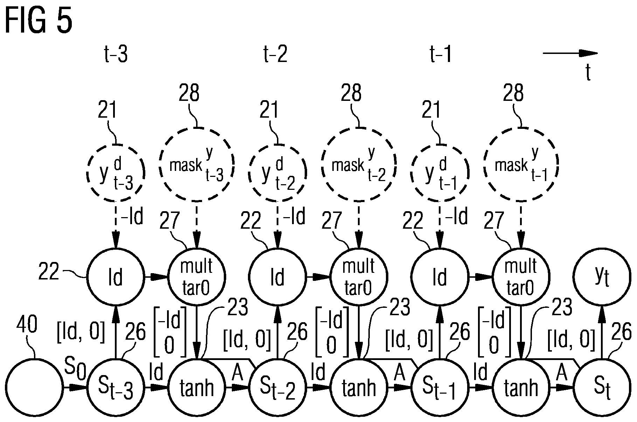

Der Aufbau des historischen konsistenten neuronalen Netzwerkes, wie in den Figuren 4 und 5 dargestellt, erlaubt es, das erste neuronale Netz auf einfache Weise zu erweitern. Die Grundarchitektur des erstens neuronalen Netzes kann also modular erweitert werden, ohne dass das gesamte Modellierungsproblem neu formuliert werden muss. Eine einfache Anpassung kann durch eine Erweiterung von Eingabedaten einer Verfügbarkeitsmaske erreicht werden.

Gemäß einer Ausführungsform werden die folgenden Schritte durchgeführt, falls die realen Zustandsinformationen für den aktuellen Zeitpunkt rechtzeitig im festen Zeittakt empfangen werden: Das erste neuronale Netz bestimmt eine Abweichung zwischen den realen Zustandsinformationen und den geschätzten Zustandsinformationen für den aktuellen Zeitpunkt und nutzt diesen zur Fehlerkorrektur. Der künstlichen Intelligenz werden die realen Zustandsinformationen für den aktuellen Zeitpunkt im festen Zeittakt zugeführt.

Falls die aktuellen realen Zustandsinformationen, also der zu messende Systemzustand, rechtzeitig im festen Zeittakt ankamen, nutzt die Struktur des ersten neuronalen Netzes die Abweichungen (Fehler) zwischen den gemessenen Größen und seiner eigenen Schätzung als zusätzliche Eingabegrößen und korrigiert hierdurch seine interne Schätzung des nächsten Systemzustands.

Mit anderen Worten prognostiziert das erste neuronale Netz den zu messenden Systemzustand (repräsentiert durch die Zustandsinformationen) auf Basis des letzten internen Zustands und rollt diesen einen Zeitschritt in die Zukunft aus. Falls die aktuellen realen Zustandsinformationen innerhalb eines tolerierten Zeitfensters über alle Kommunikationsstrecken rechtzeitig ankommen, zeigen diese im Vergleich zu den korrespondierenden aktuellen geschätzten Zustandsinformationen ggf. einen Fehler, welcher dem ersten neuronalen Netz als Eingabe dient.

Falls die aktuellen realen Zustandsinformationen nicht rechtzeitig im festen Zeittakt ankommen, setzt das erste neuronale Netz in einer möglichen Implementierung die Abweichung bzw. das Eingangssignal für den Fehler auf den Wert null, was dazu führt, dass die interne Uhr des ersten neuronalen Netzes weiterläuft und das erste neuronale Netz seine für den aktuellen Zeitpunkt geschätzten Zustandsinformationen an die künstliche Intelligenz ausgibt. Hierbei kann zwischen einzelnen externen Zustandswerten unterschieden werden, indem beispielsweise der Fehler nur für die externen Zustandswerte auf null gesetzt wird, welche in einem externen Zustandsvektor fehlen oder fehlerhaft sind.

In einer Weiterbildung werden vergangene reale Zustandsinformationen für einen vergangenen Zeitpunkt nachträglich verspätet empfangen. Das erste neuronale Netz bestimmt eine Abweichung zwischen den vergangenen realen Zustandsinformationen und vergangenen geschätzten Zustandsinformationen und nutzt diese zur Fehlerkorrektur.

Dies hat den Vorteil, dass das erste neuronale Netz bei der nächsten Schätzung der aktuellen Zustandsinformationen die ermittelte Abweichung zwischen den vergangenen realen Zustandsinformationen und den vergangenen geschätzten Zustandsinformationen berücksichtigen kann.

Gemäß einer Ausführungsform werden das erste neuronale Netz und/oder die künstliche Intelligenz in einer externen Recheneinheit, insbesondere in einer Cloud, ausgeführt.

Abhängig von der gewählten Ausführung kann also die gesamte Prognose der Schaltzeitpunkte bzw. der Restzeit in der externen Recheneinheit ausgeführt werden. Dadurch kann Rechenzeit in der Recheneinheit der Signalanlage eingespart werden. Dazu ist eine Datenkommunikation zwischen der Recheneinheit der Signalanlage und der externen Recheneinheit erforderlich. Diese kann beispielsweise drahtlos oder drahtgebunden ausgeführt sein.

In einer Weiterbildung wird das erste neuronale Netz mit realen Zustandsinformationen vorab derart trainiert, dass es die Schätzung der Zustandsinformationen für den aktuellen Zeitpunkt erlernt.

Beim Training des ersten neuronalen Netzes werden die für den aktuellen Zeitpunkt geschätzten Zustandsinformationen mit den tatsächlich für den aktuellen Zeitpunkt empfangenen realen Zustandsinformationen verglichen. Aus dem Vergleich wird mithilfe eines Backpropagation-Verfahrens eine Anpassung der Variablen des ersten neuronalen Netzes, das heißt insbesondere eine Anpassung der Elemente einer Matrix A durchgeführt. Die Anpassung wird in der Weise durchgeführt, dass das erste neuronale Netz die für den aktuellen Zeitpunkt geschätzten Zustandsinformationen präziser prognostiziert. Es wird somit ein erstes neuronales Netz bereitgestellt, das in Hardware und/oder Software realisiert ist und die mit Verweis auf das Verfahren beschriebenen Eigenschaften und Strukturen aufweist.

Gemäß einer Ausführungsform wird wenigstens ein Teil des Trainings des ersten neuronalen Netzes in einer externen Recheneinheit, insbesondere in einer Cloud durchgeführt. Nach dem Abschluss des Trainings wird das trainierte erste neuronale Netz an eine Recheneinheit der Signalanlage übertragen.

Dadurch wird Rechenkapazität der Recheneinheit der Signalanlage eingespart.

In einer Weiterbildung wird das erste neuronale Netz während des Betriebs der Signalanlage und der Vorhersage der Schaltzeitpunkte in vorgegebenen Zeitabständen trainiert und daraufhin das neu trainierte erste neuronale Netz verwendet.

Durch das Trainieren des ersten neuronalen Netzes während des Betriebs der Signalanlage wird eine kontinuierliche Anpassung des ersten neuronalen Netzes ermöglicht. Eine regelmäßige Anpassung des Modells des ersten neuronalen Netzes kann zu einer verbesserten Schätzung der Zustandsinformationen führen. Insbesondere kann durch ein regelmäßiges Training des ersten neuronalen Netzes beispielsweise ein verändertes Verkehrsaufkommen berücksichtigt werden.

Gemäß einer Ausführungsform verarbeitet das erste neuronale Netz mindestens eine Zustandsinformation mit weiteren Nicht-Observablen in einem internen Zustandsvektor.

Nicht-Observable sind versteckte Variablen, die nicht beobachtet werden können. Somit kann die gesamte Modellierung im ersten neuronalen Netz erfolgen. Es müssen keine sekundären Abbildungen zum Beispiel zur Codierung weiterer Einflüsse erlernt werden. Dadurch verringert sich die Trainingszeit des ersten neuronalen Netzes.

Auf dem computerlesbaren Datenträger ist ein Computerprogramm gespeichert, welches das Verfahren ausführt, wenn es in einem Prozessor abgearbeitet wird.

Das Computerprogramm wird in einem Prozessor abgearbeitet und führt dabei das Verfahren aus.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:

Figur 1    eine schematische Darstellung einer Lichtsignalanlage,

Figur 2    eine schematische Darstellung einer Fahrbahn mit einer Kreuzung und einer Signalanlage,

Figur 3    eine schematische Darstellung einer Ausführungsform eines zweiten neuronalen Netzes,

Figur 4    eine schematische Darstellung einer Ausführungsform eines ersten neuronalen Netzes,

Figur 5    eine Ausgabe einer geschätzten Zustandsinformation durch das erste neuronale Netz,

Figur 6    eine schematische Darstellung einer Ausführungsform eines dritten neuronalen Netzes, und

Figur 7    einen schematischen Programmablauf zur Durchführung des beschriebenen Verfahrens.

Moderne Lichtsignalanlagen zur Steuerung eines Verkehrs auf Straßen haben die Aufgabe, den Verkehr möglichst mit geringen Wartezeiten an den Lichtsignalanlagen bei einer hohen Durchsatzrate von Fahrzeugen zu steuern. Dabei werden z.B. Grüne-Welle-Verfahren eingesetzt, um einen möglichst fließenden Verkehr mit einer relativ hohen Durchschnittsgeschwindigkeit und geringen Standzeiten bei Signalanlagen zu erreichen.

Eine gute Verkehrssteuerung kann dadurch erreicht werden, dass die Verkehrsteilnehmer, insbesondere die Fahrzeuge, eine Information über zukünftige Signalzustände einer Signalgruppe einer Signalanlage und insbesondere Informationen über zukünftige Schaltzeitpunkte zwischen zukünftigen Signalzuständen einer Signalgruppe einer Signalanlage erhalten. Die zukünftigen Signalzustände beziehungsweise die Schaltzeitpunkte für den Wechsel der Signalzustände der Signalanlage können beispielsweise drahtlos von Schaltstellen am Straßenrand oder über Mobilfunk von einer externen Recheneinheit an die Fahrzeuge gesendet werden. Dadurch kann ein Fahrer eines Fahrzeuges oder eine Steuereinheit des Fahrzeugs z.B. eine optimierte Geschwindigkeit ermitteln oder festlegen, die für das Fahrzeug vorteilhaft ist. Die optimierte Geschwindigkeit kann auf Basis des aktuellen Standortes des Fahrzeugs, der beispielsweise durch eine GPS-Information bekannt ist, dem Standort der Signalgruppe und des erwarteten Schaltzeitpunktes der Signalgruppe berechnet werden.

Eine künstliche Intelligenz prognostiziert die verbleibende Zeit eines Signalzustandes einer Signalgruppe einer Signalanlage bis zu einem nächsten Schaltzeitpunkt. Eine weitere Verbesserung kann dadurch erreicht werden, dass zusätzlich eine Wahrscheinlichkeit für die verbleibende Restzeit bis zum nächsten Schaltzeitpunkt des Signalzustandes ermittelt und insbesondere an die Verkehrsteilnehmer übermittelt wird.

Die künstliche Intelligenz verarbeitet reale Zustandsinformationen, welche die Schaltzeitpunkte der Signalgruppe beeinflussen und in einem festen Zeittakt empfangen werden. Die realen Zustandsinformationen werden hierbei einem ersten neuronalen Netz als Eingangssignale zugeführt, welches von der künstlichen Intelligenz verschieden ist. Das erste neuronale Netz berechnet als Ersatz für reale Zustandsinformationen oder Bestandteile der realen Zustandsinformationen, welche für einen aktuellen Zeitpunkt nicht rechtzeitig oder fehlerhaft in dem festen Zeittakt empfangen werden, geschätzte Zustandsinformationen. Das erste neuronale Netz gibt die geschätzten Zustandsinformationen für den aktuellen Zeitpunkt in dem festen Zeittakt an die künstliche Intelligenz aus, wobei die geschätzten Zustandsinformationen die realen Zustandsinformationen oder die Bestandteile der realen Zustandsinformationen ersetzen, welche nicht rechtzeitig oder fehlerhaft empfangen wurden.

Die Vorhersage durch die künstliche Intelligenz kann auf einzelnen Signalanlagen mit einer oder mehreren Signalgruppen, mehreren Signalanlagen mit mehreren Signalgruppen und einem Verbund von Signalanlagen und Signalgruppen angewendet werden. Die Vorhersage über die Schaltzeitpunkte für die Signalzustände und die Wahrscheinlichkeiten für die prognostizierten Signalzustände bzw. Restzeiten können für einen vorgegebenen zeitlichen Horizont in der Zukunft ermittelt werden. Bei der Prognose der Schaltzeitpunkte kann es sich um ein Klassifikationsproblem handeln, das mittels einer Kreuzentropie optimiert wird. Als Ergebnis der Prognose durch die künstliche Intelligenz wird eine Wahrscheinlichkeitsverteilung über den Signalzustand der jeweiligen Signalgruppe über den zeitlichen Prognosehorizont erhalten.

Ein mit der künstlichen Intelligenz nachgebildetes Prognosemodell für die Schaltzeitpunkte kann zwei Aufgaben erfüllen: es erlernt datenbasiert ein Schaltverhalten der Signalgruppen der Signalanlage und in Abhängigkeit von Uhrzeit, Wochentag und Feiertag ein Systemmodell der Verkehrsströme, wie sie beispielsweise von Detektoren erfasst werden, sowie das daraus resultierende Schaltverhalten der Signalgruppen der Signalanlage. Das Prognosemodell kann vorzugsweise durch Verfahren zur Modellierung dynamischer Systeme erstellt werden.

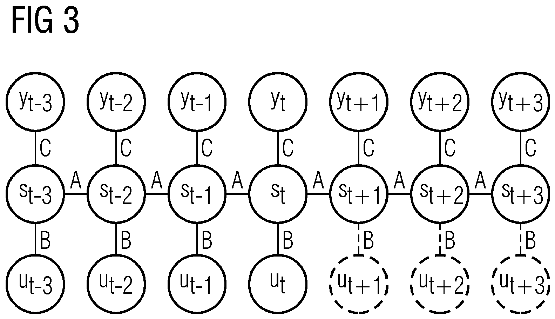

Zur Implementierung der künstlichen Intelligenz eignet sich insbesondere das in Figur 3 gezeigte zweite neuronale Netz, vorzugsweise ein rekurrentes neuronales Netz. Beispielsweise können für die Implementierung der künstlichen Intelligenz folgende Architekturen und Netzwerke verwendet werden: rekurrente neuronale Netze, Fixpunkt-Konvergenz-Netze, Elman-Jordan-Netze, ECNN, Kausal-Retro-Kausal-Netzwerke, LSTM, Gated Recurrent Units. Neuronalen Netze ermöglichen es, eine Aussage zur Prognosesicherheit der Schaltzustände bzw. der Schaltzeitpunkte zu liefern, sowie sichere von unsicheren Zuständen zu unterscheiden. Möglichkeiten hierzu sind: Die Ableitung der Unsicherheit aus einem Modellfehler, Streuung des Outputs von Modellen, die Ableitung einer Bandbreite einer Conditional-Density-Estimation, Generierung von Modelloutput durch Szenarienbildung. Zudem kann das in Figur 3 gezeigte zweite neuronale Netz in der Lage sein, statistische sowie systemimmanente dynamische Zusammenhänge zwischen Inputvariablen und Outputvariablen zu erlernen. Beispielsweise kann das zweite neuronale Netz ein erhöhtes Verkehrsaufkommen zu einer bestimmten Uhrzeit lernen und unter Berücksichtigung dieser statistischen Zusammenhänge beispielsweise eine höhere Rotwahrscheinlichkeit für eine gegebene Signalgruppe zu dieser Zeit prognostizieren.

Unter einem Schaltzeitpunkt wird der Zeitpunkt verstanden, zu dem eine Signalgruppe einen Signalwechsel vornimmt. Beispielsweise kann die Signalgruppe von dem Signal freie Fahrt, das beispielsweise durch ein grünes Signal angezeigt wird, auf gesperrte Fahrt, das beispielsweise durch ein rotes Signal angezeigt wird, umschalten. Dies kann als Regressionsproblem zwischen einem echten Schaltzeitpunkt gegen einen prognostizierten Schaltzeitpunkt formalisiert werden. Dabei kann die Architektur des Prognosemodells in der Lage sein, einen gewissen Memory-Effekt abzubilden.

Die künstliche Intelligenz kann eine Prognosematrix liefern, die für jeden Zeitpunkt in einem vorgegebenen Zeitfenster und für jede Signalgruppe einer Signalanlage eine prognostizierte Wahrscheinlichkeit für einen Signalzustand enthält. Beispielsweise kann die Prognosematrix eine Wahrscheinlichkeit für ein grünes Signal einer Signalgruppe oder eine Wahrscheinlichkeit für ein rotes Signal einer Signalgruppe für jedes Zeitfenster enthalten. Diese Aufgabe kann mithilfe eines Multi-Objective-Lernproblems gelöst werden. Dabei kann eine Prognose von Signalzuständen, insbesondere Wahrscheinlichkeiten für Signalzustände und Restzeitprognosen bis zum Umschaltzeitpunkt von einem Signalzustand zu einem folgenden Signalzustand für alle Signalgruppen einer Signalanlage mithilfe eines neuronalen Netzes gelöst werden, das das Lernproblem dynamisch und integriert löst.

Die künstliche Intelligenz benötigt keine Information über einen genauen Schaltplan der Lichtsignalanlage und auch kein Expertenwissen über die kausalen Zusammenhänge in einer Verkehrssteuerung. Sie verfügt über eine hohe Skalierbarkeit im Hinblick auf eine Anwendung auf verschiedene Lichtsignalanlagen, da die künstliche Intelligenz nur anhand eines gegebenen Datensatzes kalibriert bzw. trainiert werden muss. Darüber hinaus ist das Prognosemodell in Echtzeit nutzbar und kann jederzeit auf aktuelle Daten nachtrainiert werden. Einen zusätzlichen Vorteil bietet eine Generalisierungsfähigkeit, die es erlaubt, das System auf Kreuzungen mit beliebiger Komplexität ohne Expertenwissen zu übertragen.

Neuronale Netze sind parametrische Funktionen, die datengetrieben über stochastische Gradientenabstiegsverfahren trainiert werden können. So sind die neuronalen Netze in der Lage, nicht-lineare Zusammenhänge ohne Expertenwissen zu erkennen. Ebenso ist eines der technischen Merkmale der neuronalen Netze, dass die verwendete Architektur eine integrierte Prognose von Schaltzeitpunkt und -zustand erlaubt. Rekurrente neuronale Netze ermöglichen eine höhere Prognosegüte, da sie in der Lage sind, die zugrundeliegende Dynamik des zu modellierenden Systems sowie auftretende Memory-Effekte besser abzubilden als reine Input-Output-Modelle, wie zum Beispiel Feed-Forward-Netze.

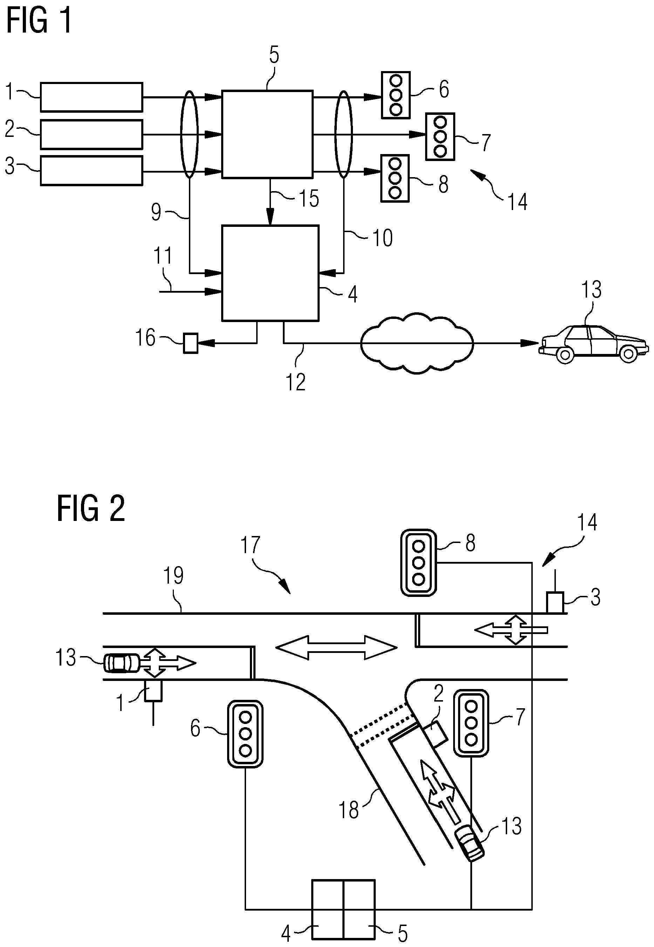

Figur 1 zeigt in einer schematischen Darstellung einen Aufbau einer Signalanlage 14 mit drei Signalgruppen 6, 7, 8. Die Signalanlage 14 weist eine Steuereinheit 5 auf, die mit Detektoren 1, 2, 3 verbunden ist. Die Detektoren 1, 2, 3 erfassen verschiedene Parameter eines Verkehrs auf wenigstens einer Straße, an der die Signalanlage 14 mit den Signalgruppen 6, 7, 8 angeordnet ist. Mithilfe der Detektoren 1, 2, 3 werden auf der Straße z.B. Fahrzeuge erfasst. Dadurch kann abhängig von einer Fahrzeugdichte auf der oder den Straßen eine an den Verkehr angepasste Steuerung der Signalanlage 14 erfolgen. Zudem ist eine Recheneinheit 4 vorgesehen, die entweder direkt von den Detektoren 1, 2, 3 Informationen über den Verkehr auf der Straße oder über die Steuereinheit 5 Informationen über den Verkehr erhält. Auf diese Weise erhält auch die Recheneinheit 4 die Informationen über den Verkehr, insbesondere über die Verkehrsdichte auf der bzw. den Straßen einer Kreuzung. Die Daten der Detektoren 1, 2, 3 werden z.B. von der Recheneinheit 4 über einen ersten Eingang 9 erhalten.

Die Steuereinheit 5 verfügt über einen Datenspeicher und über Steuerprogramme, mit denen abhängig von verschiedenen Parametern und insbesondere abhängig von Verkehrsdaten, die mithilfe der Detektoren 1, 2, 3 erfasst werden, die Signalgruppen 6, 7, 8 der Signalanlage 14 in der Weise angesteuert werden, dass ein gewünschter Verkehrsfluss auf der Straße, insbesondere über eine Kreuzung erfolgen kann.

Die Signalgruppen 6, 7, 8 sind in der dargestellten Ausführungsform als Lichtsignalgruppen ausgebildet. Dabei weist jede Signalgruppe eine Anzeige für rotes Licht, eine Anzeige für gelbes Licht und eine Anzeige für grünes Licht auf. Die Bedeutung der einzelnen Lichtfarben für den Verkehr ist länderspezifisch geregelt.

Abhängig von der gewählten Ausführungsform können die Signalgruppen 6, 7, 8 auch andere Signale aufweisen, um eine Fahrt freizugeben oder eine Fahrt zu sperren. Die Steuereinheit 5 gibt die Steuersignale für die Signalgruppen der Signalanlage auch an einen zweiten Eingang 10 der Recheneinheit 4 weiter. Somit verfügt die Recheneinheit 4 auch über die Information, welche Signalgruppe welches Signal gerade anzeigt. Zudem ist ein vierter Eingang 15 vorgesehen, über den die Steuereinheit 5 an die Recheneinheit 4 weitere Informationen über das Steuerprogramm übermittelt, das die Steuereinheit 5 verwendet, um die Signalanlage 14 mit den Signalgruppen 6, 7, 8 anzusteuern. Die Informationen über das Steuerprogramm können beispielsweise die Umlaufzeit, eine Information darüber, ob es sich um eine zentrale Steuerung, eine lokale Steuerung, oder um eine Steuerung handelt, die durch den Verkehr aktiviert werden kann, ob Fehler in der Steuerung oder der Lichtsignalanlage vorliegen, ob es sich um eine verkehrsabhängige Steuerung handelt, ob ein Fehler am Detektor vorliegt, ob es sich um eine überlagerte Steuerung oder um eine zentrale Steuerung handelt, in welchem Zustand sich die Steuereinheit befindet usw. enthalten.

Die Recheneinheit 4 verfügt weiterhin über einen dritten Eingang 11, über den weitere Informationen erhalten werden. Die weiteren Informationen können beispielsweise eine Verkehrsinformation, eine Information über ein öffentliches Verkehrsmittel, eine Meldung eines öffentlichen Verkehrsmittels an einem Meldepunkt oder eine Anforderung für eine freie Fahrt durch ein öffentliches Verkehrsmittel usw. beinhalten. Die Meldung des Verkehrsmittels kann beispielsweise eine Information über die Art des Verkehrsmittels oder eine Kennung des Verkehrsmittels, wie zum Beispiel eine Liniennummer des Verkehrsmittels aufweisen. Ein öffentliches Verkehrsmittel kann ein Bus, eine Trambahn usw. sein. Zudem verfügt die Recheneinheit 4 über eine Zeiteinheit, mit der die aktuelle Zeit bestimmt werden kann. Weiterhin verfügt die Recheneinheit 4 über eine Information, welche Uhrzeit, welcher Wochentag, welcher Monat, welcher Kalendertag, welches Jahr usw. gerade ist. Zudem kann auch eine Information über einen aktuellen Feiertag der Recheneinheit 4 zur Verfügung stehen oder über den dritten Eingang 11 zur Verfügung gestellt werden.

Weiterhin können der Recheneinheit 4 über den dritten Eingang 11 Informationen über den Verkehr, beispielsweise Verkehrsmeldungen übermittelt werden. Verkehrsmeldungen können zum Beispiel Informationen über Unfälle, Staus, hohes Verkehrsaufkommen, Sperrung einer Straße usw. sein.

Die Recheneinheit 4 verfügt über das zuvor erläuterte erste neuronale Netz in Form eines Computerprogrammes und/oder in Form von Hardwareschaltungen, welches auch im Zusammenhang der Figuren 4 und 5 weiter unten näher erläutert wird. Das erste neuronale Netz erhält in einem festen Zeittakt als reale Zustandsinformationen, welche die Schaltzeitpunkte der Signalgruppen 6, 7, 8 beeinflussen, beispielsweise die Signale des ersten Eingangs 9, des zweiten Eingangs 10, des dritten Eingangs 11 und des vierten Eingangs 15. So können die realen Zustandsinformationen etwa umfassen:

- Signalgruppen-Zustände der Signalgruppen 6, 7, 8, die beispielsweise von Detektoren erfasst oder anhand der Steuersignale, die über den zweiten Eingang 10 anliegen, ermittelt werden,
- System-Zustände, insbesondere von der Steuereinheit 5 der Signalanlage 14, welche über den vierten Eingang 15 empfangen werden,
- Detektor-Werte, insbesondere von den Detektoren 1, 2, 3 der Signalanlage 14, welche über den ersten Eingang 9 empfangen werden, und/oder
- Nachrichten von Fahrzeugen, insbesondere Meldungen und/oder Anforderungen von öffentlichen Transportmitteln, insbesondere ÖV-Telegramme, welche über den dritten Eingang 11 empfangen werden.

Die Recheneinheit 4 verfügt außerdem über die zuvor erläuterte künstliche Intelligenz in Form eines Computerprogrammes und/oder in Form von Hardwareschaltungen. Die künstliche Intelligenz, welcher die realen Zustandsinformationen zugeführt werden, sagt in dem festen Zeittakt mindestens einen Schaltzeitpunkt der Signalgruppe vorher.

Das erste neuronale Netz berechnet als Ersatz für reale Zustandsinformationen oder Bestandteile der realen Zustandsinformationen, welche für einen aktuellen Zeitpunkt nicht rechtzeitig oder fehlerhaft in dem festen Zeittakt empfangen werden, geschätzte Zustandsinformationen. Das erste neuronale Netz gibt die geschätzten Zustandsinformationen für den aktuellen Zeitpunkt in dem festen Zeittakt an die künstliche Intelligenz aus, wobei die geschätzten Zustandsinformationen die realen Zustandsinformationen oder die Bestandteile der realen Zustandsinformationen ersetzen, welche nicht rechtzeitig oder fehlerhaft empfangen wurden. Die künstliche Intelligenz ist beispielsweise ein zweites neuronales Netz, wie es in Figur 3 gezeigt ist.

Die Recheneinheit 4 kann sowohl das erste neuronale Netz als auch die künstliche Intelligenz beinhalten. Es können anstelle der Recheneinheit 4 jedoch auch zwei Recheneinheiten vorgesehen werden, welche benachbart angeordnet sind. In dieser Variante führt eine der beiden Recheneinheiten das erste neuronale Netz und die andere Recheneinheit die künstliche Intelligenz aus. Die Recheneinheit, auf der die künstliche Intelligenz ausgeführt wird, ist beispielsweise eine dedizierte Hardware. Die Steuereinheit 5 ist beispielsweise ein Verkehrssteuergerät Sitraffic sX oder ein Steuergerät aus der Sitraffic C900-Familie.

Das erste neuronale Netz ermöglicht es der künstlichen Intelligenz, in einem festen Zeittakt (beispielsweise einmal pro Sekunde) eine sinnvolle Prognose der zu erwartenden Schaltzeitpunkte der Signalgruppen 6, 7, 8 zu erstellen und für die in der Umgebung befindlichen Fahrzeuge 13 bereitzustellen, und zwar selbst dann, wenn der Kommunikationsweg zwischen der Recheneinheit 4 und der Steuereinheit 5 im laufenden Betrieb aus diversen Gründen gestört ist.

Bei solchen Störungen läuft die interne Zeit in der Steuereinheit 5 unaufhaltsam weiter und Schaltzeitpunkte würden verglichen zur Realzeit entweder zu spät oder aufgrund von fehlenden realen Zustandsinformationen falsch berechnet. Durch das erste neuronale Netz wird ein Mechanismus geschaffen, der trotz fehlender oder zeitlich stark verzögerter Daten eine robustere Prognose im festen Zeittakt ermöglicht.

Die künstliche Intelligenz ist ausgebildet, um aufgrund wenigstens eines der zur Verfügung stehenden Parameter eine Prognose für einen Schaltzeitpunkt wenigstens einer Signalgruppe von einem Signalzustand zu einem folgenden Signalzustand zu prognostizieren. Abhängig von der gewählten Ausführungsform kann für wenigstens eine Signalgruppe somit die Restzeitdauer des vorliegenden aktuellen Signalzustandes und auch Schaltzeitpunkte zwischen zukünftigen Signalzuständen der Signalgruppe prognostiziert werden. Der zeitliche Horizont, bis zu dem der Signalverlauf und damit die Schaltzeitpunkte zwischen den Signalzuständen einer Signalgruppe prognostiziert wird, kann im Bereich von einigen Sekunden bis zu 30 Sekunden und auch länger als 30 Sekunden liegen. Die Prognose kann eine Wahrscheinlichkeit für die prognostizierte Restzeitdauer des aktuellen Signalzustandes einer Signalgruppe ermitteln. Weiterhin kann auch für zukünftige Signalzustände eine Wahrscheinlichkeit für die prognostizierte Zeitdauer und die prognostizierten Schaltzeitpunkte zwischen den Signalzuständen ermittelt werden.

Die Ermittlung der Schaltzeitpunkte zwischen Signalzuständen einer Signalgruppe kann in festgelegten Zeitabständen aktualisiert werden. Beispielsweise können jede Sekunde für den vorgegebenen zukünftigen Zeithorizont von beispielsweise größer als 30 Sekunden, insbesondere größer als 120 Sekunden die Schaltzeitpunkte zwischen den Signalzuständen der Signalgruppe prognostiziert werden. Zudem können auch jede Sekunde die Wahrscheinlichkeiten für die Signalzustände der Signalgruppe ermittelt werden. Damit wird gleichzeitig eine Restdauer des vorliegenden Signalzustandes der Signalgruppe ermittelt. Abhängig von der gewählten Ausführungsform kann die Recheneinheit 4 ausgebildet sein, um für mehrere Signalgruppen der Signalanlage, insbesondere für alle Signalgruppen der Signalanlage die Schaltzeitpunkte für einen Übergang zwischen Signalzuständen der Signalanlagen für einen vorgegebenen zukünftigen Zeithorizont zu ermitteln. Zudem kann die Recheneinheit 4 ausgebildet sein, um für mehrere Signalgruppen 6, 7, 8, insbesondere für alle Signalgruppen der Signalanlage auch die Wahrscheinlichkeiten für die Restzeitdauern der aktuellen Signalzustände der Signalgruppen der Signalanlage zu ermitteln.

Weiterhin können auch für den Wechsel von weiteren Signalzuständen der Signalgruppen der Signalanlage die Schaltzeitpunkte und die Wahrscheinlichkeiten für die folgenden Signalzustände der Signalgruppen ermittelt werden. Zudem kann abhängig von der gewählten Ausführungsform die Recheneinheit 4 ausgebildet sein, um für mehrere Signalanlagen die Schaltzeitpunkte der Signalgruppen der Signalanlagen und die Wahrscheinlichkeiten für die Signalzustände der Signalgruppen der Signalanlage zu ermitteln. Die Recheneinheit 4 und die Steuereinheit 5 können abhängig von der gewählten Ausführungsform auch in einer einzigen Recheneinheit ausgebildet sein. Die Wahrscheinlichkeiten werden von der Recheneinheit 4 aus einem gelernten historischen Vergleich der prognostizierten Schaltzeitpunkte mit den tatsächlich gemessenen Schaltzeitpunkten ermittelt. Dabei werden Schaltzeitpunkte für bestimmte Verkehrssituationen und Zustände der Signalanlage für einen festgelegten zukünftigen Zeitraum prognostiziert.

Anschließend wird durch Messung mithilfe von Detektoren überprüft, mit welcher Wahrscheinlichkeit die prognostizierten Signalzustände tatsächlich aufgetreten sind. Abhängig von der gewählten Ausführung können auch andere Verfahren zur Ermittlung der Wahrscheinlichkeiten für die Signalzustände verwendet werden.

Abhängig von der gewählten Ausführungsform wird wenigstens ein zukünftiger Schaltzeitpunkt oder eine Restzeit des aktuellen Signalzustandes oder eine Zeitdauer eines zukünftigen Signalzustandes von der Recheneinheit 4 an ein Fahrzeug 13 über einen Ausgang 12 beispielsweise drahtlos übertragen. Abhängig von der gewählten Ausführungsform können die Schaltzeitpunkte zukünftiger Übergänge zwischen Signalzuständen für einen vorgegebenen zukünftigen Zeithorizont wenigstens einer der Signalgruppen der Signalanlage, insbesondere aller Signalgruppen der Signalanlage an das Fahrzeug 13 übermittelt werden.

Abhängig von der gewählten Ausführungsform können die Zeitdauern der aktuellen Signalzustände der Signalgruppen und die Zeitdauern der zukünftigen Signalzustände der Signalgruppen für einen vorgegebenen zukünftigen Zeithorizont wenigstens für eine der Signalgruppen der Signalanlage, insbesondere für alle Signalgruppen der Signalanlage an das Fahrzeug 13 übermittelt werden. Weiterhin können diese Informationen auch an eine externe Recheneinheit 16 übermittelt werden.

Das Fahrzeug 13 und/oder die externe Recheneinheit 16 können die übermittelten Informationen über die zukünftigen Schaltzeitpunkte der Signalgruppen der Signalanlage und/oder die Zeitdauern der aktuellen und/oder der zukünftigen Signalzustände der Signalgruppen und/oder die Wahrscheinlichkeiten der aktuellen und/oder der zukünftigen Signalzustände der Signalgruppen für eine statistische Auswertung, eine Reiseplanung einer Fahrtroute und/oder eine Steuerung einer Geschwindigkeit des Fahrzeuges oder eine Ausgabe einer Information an einen Fahrer verwenden.

Beispielsweise können die Daten im Fahrzeug 13 von einer Steuereinheit zur automatischen Steuerung einer Geschwindigkeit des Fahrzeugs verwendet werden. Zudem können die Informationen im Fahrzeug 13 in ein Navigationssystem beziehungsweise Navigationsprogramm eingelesen und für die Fahrroutenplanung berücksichtigt werden. Weiterhin können die Informationen dem Fahrer über ein Display, beispielsweise ein Display eines Mobiltelefons oder ein Display eines integrierten Navigationssystems angezeigt werden. Die externe Recheneinheit 16 kann zudem ausgebildet sein, um die übermittelten Informationen über die zukünftigen Schaltzeitpunkte der Signalgruppen der Signalanlage und deren Wahrscheinlichkeiten an Fahrzeuge 13 drahtlos zu übermitteln.

Die externe Recheneinheit 16 kann als Cloud oder als einzelne externe Recheneinheit realisiert sein. Abhängig von der gewählten Ausführungsform können die realen Zustandsinformationen, die von der Recheneinheit 4 erfasst werden, auch zur externen Recheneinheit 16 übertragen werden.

In dieser Variante werden die realen Zustandsinformationen also beispielsweise in eine Cloud als Recheneinheit 16 gesendet. In der Cloud können das erste neuronale Netz und die künstliche Intelligenz ebenso zur Ausführung gebracht werden, da ein reines Senden der realen Zustandsinformationen weniger Datenverkehr auf einer LTE-Strecke verursacht, als wenn die Prognosewerte zeitgleich mitübertragen werden. Auch auf dieser Strecke können potenziell Pakete verloren gehen oder zeitlich stark verzögert die Cloud erreichen. Ursächlich hierfür sind beispielsweise erstens eine Überlastung des Mobilfunknetzwerkes oder zweitens ein Ausfall von Hardware-Komponenten zwischen der lokalen Sendeeinheit und dem ersten neuronalen Netz in der Cloud. Auch diese Übertragungsverluste kann das erste neuronale Netz in der Cloud vorteilhaft ausgleichen.

Wenn das erste neuronale Netz und die künstliche Intelligenz sowohl lokal an der Signalanlage 14 als auch in der Cloud installiert und ausgeführt werden, können die Prognosen der künstlichen Intelligenz nicht nur lokal an der Signalanlage 14, sondern auch zentral zur Verfügung gestellt und genutzt werden, beispielsweise durch Navigationssystem-Anbieter, Automobil-OEMs und Stadtverwalter.

Zudem kann die externe Recheneinheit 16 ausgebildet sein, um das erste neuronale Netz und/oder die künstliche Intelligenz zu trainieren und die entsprechenden Modelle zur Vorhersage der Zustandsinformationen bzw. der Schaltzeitpunkte und der Wahrscheinlichkeit der Signalzustände zu realisieren.

Das trainierte erste neuronale Netz und/oder die trainierte künstliche Intelligenz können anschließend als Rechenprogramm an die Recheneinheit 4 übertragen werden. Die Schnittstelle zwischen der externen Recheneinheit 16 und der Recheneinheit 4 kann drahtlos, aber auch drahtgebunden ausgebildet sein. Weiterhin kann abhängig von der gewählten Ausführungsform auch die externe Recheneinheit 16 die Berechnung der Prognose für die Schaltzeiten und/oder die Berechnung der Wahrscheinlichkeiten der Signalzustände ausführen. Somit kann die externe Recheneinheit 16 die ermittelten Wahrscheinlichkeiten der aktuellen und zukünftigen Signalzustände der Signalgruppen und die ermittelten zukünftigen Schaltzeiten der Signalgruppen an die Recheneinheit 4 übermitteln. Abhängig von der gewählten Ausführungsform kann die externe Recheneinheit 16 ausgebildet sein, um die Informationen über die Schaltzeiten und die Wahrscheinlichkeiten der Schaltzeiten an weitere Recheneinheiten beziehungsweise an die Fahrzeuge 13 zu übermitteln. Zudem kann die Recheneinheit 4 die Übermittlung der Schaltzeiten der Signalgruppen und/oder der Wahrscheinlichkeiten der Signalzustände an die Fahrzeuge 13 beispielsweise drahtlos ausführen.

Abhängig von der gewählten Ausführungsform kann die Recheneinheit 4 und/oder die externe Recheneinheit 16 das erste neuronale Netz und/oder die künstliche Intelligenz trainieren. Beispielsweise können die Daten, die die Recheneinheit 4 zur Prognose der Schaltzeiten und/oder der Wahrscheinlichkeiten der Signalzustände benötigt, über eine Datenverbindung von der Steuereinheit 5 angefordert werden. Beispielsweise können die Parameter jede Sekunde von der Steuereinheit 5 abgefragt und erhalten werden. Zudem können die zum Trainieren des Modells benötigten Daten jede Sekunde von der Recheneinheit 4 und/oder von der Steuereinheit 5 an die externe Recheneinheit 16 übertragen werden.

Abhängig von der gewählten Ausführung kann auch nur die Recheneinheit 4 das Trainieren des ersten neuronalen Netzes und/oder der künstlichen Intelligenz ausführen. Zudem kann das erste neuronale Netz und/oder die künstliche Intelligenz von extern an die Recheneinheit 4 übermittelt werden.

Zum Trainieren der künstlichen Intelligenz kann z.B. ein Back-Propagation-Verfahren von S. Haykin, Neural Networks: A Comprehensive Foundation, Macmillan College Publishing Company, Second Edition, ISBN 0-13-273350-1, Seite 732 bis 789, 1999 verwendet werden. Bei diesem bekannten Trainingsverfahren wird in der folgenden Trainingsphase die Kostenfunktion minimiert.

Alternativ können die Funktionen des ersten neuronalen Netzes und der künstlichen Intelligenz auch in einem dritten neuronalen Netz zusammengefasst werden, welches das erste neuronale Netz und die künstliche Intelligenz ersetzt. Die vorangegangenen Ausführungen zu Figur 1 gelten entsprechend.

Figur 2 zeigt in einer schematischen Darstellung eine Kreuzung 17, an der eine zweite Straße 18 in eine erste Straße 19 einmündet beziehungsweise davon abzweigt. An der ersten Stra-ße 19 ist links von der Kreuzung 17 die erste Signalgruppe 6 und der erste Detektor 1 angeordnet. An der zweiten Straße 18 sind der zweite Detektor 2 und die zweite Signalgruppe 7 angeordnet. Auf der rechten Seite der Kreuzung 17 sind auf der ersten Straße 19 der dritte Detektor 3 und die dritte Signalgruppe 8 angeordnet. Die Detektoren 1, 2, 3 sind mit der Steuereinheit 5 und der Recheneinheit 4 verbunden. Die Recheneinheit 4 und die Steuereinheit 5 können abhängig von der gewählten Ausführungsform auch in einer einzigen Recheneinheit ausgebildet sein. Beispielsweise sind die Recheneinheit 4 und/oder die Steuereinheit 5 am Straßenrand in einer Schaltbox angeordnet. Die Signalgruppen 6, 7, 8 der Signalanlage 14 stehen mit der Steuereinheit 5 in Verbindung. Die Detektoren 1, 2, 3 sind ausgebildet, um Fahrzeuge zu detektieren, die sich der Kreuzung 17 nähern. Somit kann die Steuereinheit 5 abhängig von dem aktuellen Verkehrsaufkommen eine verkehrsabhängige Steuerung der Signalzustände der Signalgruppen 6, 7, 8 der Signalanlage 14 durchführen.

Die Steuereinheit 5 kann beispielsweise über ein Ethernet mit der Recheneinheit 4 in Verbindung stehen. Über diese Verbindung können aktuelle reale Zustandsinformationen über das Signalprogramm, die Umlaufzeit, die Zykluszeit für die Ansteuerung der Signalzustände der Signalgruppen, die Daten der Detektoren, Informationen über Meldungen öffentlicher Transportmittel usw. in einem festen Zeittakt, beispielsweise sekündlich übermittelt werden.

Wie zuvor erläutert führt die Recheneinheit 4 beispielsweise das erste neuronale Netz und die künstliche Intelligenz aus. In einer Variante werden diese beiden Funktionen von getrennten, modularen Recheneinheiten bereitgestellt, welche die Recheneinheit 4 ersetzen. In einer weiteren Variante werden eine oder beide Funktionen alternativ oder ergänzend in einer Cloud bereitgestellt.

Die künstliche Intelligenz ist beispielsweise als zweites neuronales Netz, beispielweise als rekurrentes neuronales Netz, Fixpunkt-Konvergenz-Netz, Elman-Jordan-Netz, ECNN, Kausal-Retro-kausales Netz, LSTM oder Gated Recurrent Netz ausgeführt.

Alternativ können die Funktionen des ersten neuronalen Netzes und der künstlichen Intelligenz auch in einem dritten neuronalen Netz zusammengefasst werden, welches das erste neuronale Netz und die künstliche Intelligenz ersetzt. Die vorangegangenen Ausführungen zu Figur 2 gelten entsprechend.

Figur 3 zeigt als einfaches, schematisches Beispiel für eine Implementierung der künstlichen Intelligenz ein zweites neuronales Netz in Form eines rekurrenten neuronalen Netzes.

Im Folgenden wird eine grundlegende Funktionsweise des zweiten neuronalen Netzes erläutert. Das folgende Gleichungssystem 1.1 beschreibt zeitdiskrete Zustände eines dynamischen Systems in einer rekurrenten Beschreibung:

$$s_t = f(s_{t-1}, u_t) \qquad \textit{Zustandsübergang}$$
$$y_t = g(s_t) \qquad \textit{Ausgangsgleichung} \qquad \textit{1.1}$$

Ein Zustandsübergang wird durch einen vorhergehenden internen versteckten Zustand des Systems $s_{t-1}$ zum Zeitpunkt t-1 und den Einfluss eines externen Parameters $u_t$ zum Zeitpunkt t auf den neuen Zustand $s_t$ zum Zeitpunkt t festgelegt. Die Zustände $s_t$, $s_{t-1}$ usw. können Parameter oder Vektoren mit mehreren Parametern sein. Die Ausgangsgleichung ermittelt den bestimmbaren Ausgangsvektor $y_t$. Bei der Signalanlage sind z.B. die externen Parameter $u_t$ die Parameter, die mit den Detektoren erfasst werden. Der Ausgangsvektor $y_t$ sind die Signalzustände der Signalgruppen der Signalanlage.

Die Aufgabe besteht nun darin, das dynamische System der Gleichungen 1.1, das durch die Funktionen f und g festgelegt ist, für ein vorliegendes System der Steuerung der Signalanlage zu ermitteln. Dies kann dadurch erfolgen, dass ein gemittelter Unterschied zwischen gemessenen Ausgangsvektoren $y_t^d, t = 1,...,T$ und die berechneten Daten $y_t$ für ein Modell minimal werden:

$$\frac{1}{T} \sum_{t=1}^{T} (y_t - y_t^{\,d})^2 \;\rightarrow\; \min_{f,g}$$

$$(1.2)$$

Die Gleichungen 1.1 und 1.2 können als zeitverzögertes rekurrentes neuronales Netz mit folgenden Gleichungen definiert werden:

$$s_t = NN(s_{t-1}, u_t, v) \qquad \textit{Zustandsübergang}$$
$$y_t = NN(s_t; w) \qquad \textit{Ausgangsgleichung} \qquad (1.3)$$

Durch die Spezifizierung der Funktionen f und g als neuronale Netze mit Parametervektoren v, w sind die Gleichungen 1.3 in ein Problem zur Identifizierung von Parametern mit folgender Formel übertragen worden:

$$\frac{1}{T} \sum_{t=1}^{T} (y_t - y_t^{\,d})^2 \;\rightarrow\; \min_{v,\,w}$$

$$(1.4)$$

Das dynamische System, das die folgenden zwei Gleichungen aufweist, kann als das zweite neuronale Netz gemäß Figur 3 realisiert werden.

$$s_t = tanh(As_{t-1}, Bu_t) \quad \textit{Zustandsübergang}$$
$$y_t = Cs_t \qquad \textit{Ausgangsgleichung} \qquad (1.5)$$

Damit wird ein Eingangsvektor u zum Zeitpunkt t mit Gewichten einer zweidimensionalen Matrix B auf die versteckte Schicht mit den Zuständen $s_t$ einwirken. Die versteckte Schicht wird mit Gewichten einer zweidimensionalen Matrix C in den Ausgangsvektor $y_t$ übergehen. Gleichzeitig wird der Zustand $s_{t-1}$ mit Gewichten einer zweidimensionalen Matrix A auf die versteckte Schicht einwirken. Zudem wird die versteckte Schicht mit einer Einheitsmatrix id auf den Zustand $s_t$ einwirken. Dabei ist die Ausgangsfunktion NN($s_t$; w) als lineare Funktion realisiert.

Unter diesen Annahmen kann das in Figur 3 schematisch dargestellte zweite neuronale Netz realisiert werden. Das zweite neuronale Netz weist eine versteckte Schicht mit den versteckten Zuständen $s_t$ auf, wobei t einen inkrementellen Zeitpunkt definiert. Zudem wird ein Eingangsvektor $u_t$ mit den Gewichten der Matrix B auf den jeweiligen versteckten Zustand einwirken. Weiterhin wird aus dem versteckten Zustand $s_t$ mit den Gewichten der Matrix C ein Ausgangsvektor $y_t$ ermittelt. Gleichzeitig wirkt ein versteckter Zustand $s_{t-1}$ auf den folgenden Zustand $s_t$ mit den Gewichten der Matrix A ein.

Eine Aufgabe besteht nun darin, das Modell des Ausgangsvektors $y_t$ möglichst präzise zu ermitteln. In dem dargestellten Ausführungsbeispiel wird das Einwirken von drei vorhergehenden Zuständen, das heißt $s_{t-3}$, $s_{t-2}$ und $s_{t-1}$ zusammen mit dem aktuellen versteckten Zustand $s_t$ verwendet, um zukünftige versteckte Zustände $s_{t+1}$, $s_{t+2}$ usw. und auch zukünftige Ausgangsvektoren $y_{t+1}$, $y_{t+2}$ usw. zu ermitteln.

Bei einem Lernverfahren wird das zweite neuronale Netz in der Weise trainiert, dass die Matrizen A, B und C ermittelt werden, sodass die mit dem zweiten neuronalen Netz berechneten Ausgangsvektoren $y_t$ möglichst genau den gemessenen Ausgangsvektoren $y_t$ entsprechen. In dem vorliegenden Fall werden zum Trainieren des zweiten neuronalen Netzes als Eingangsvektoren $u_t$ die Parameter verwendet, die der Recheneinheit 4 über den ersten Eingang 9, den dritten Eingang 11 und den vierten Eingang 15 zugeführt werden. Abhängig von der gewählten Ausführungsform kann auch nur ein Teil der Parameter als Eingangsvektor verwendet werden.

Als Ausgangsvektor wird wenigstens ein Schaltzeitpunkt einer Signalgruppe von einem aktuellen Signalzustand auf einen folgenden Signalzustand ermittelt. Zudem kann abhängig von der gewählten Ausführungsform der Ausgangsvektor eine Wahrscheinlichkeit für die Richtigkeit eines prognostizierten Signalzustandes wenigstens einer Signalgruppe der Signalanlage umfassen. Weiterhin kann der Ausgangsvektor für einen vorgegebenen Zeitpunkt die Schaltzeitpunkte zwischen den auftretenden Signalzuständen einer Signalgruppe aufweisen. Zudem kann der Ausgangsvektor Wahrscheinlichkeiten für die Signalzustände wenigstens einer Signalgruppe für einen vorgegebenen Prognosezeitraum aufweisen. Zudem kann der Ausgangsvektor die Schaltzeitpunkte und/oder die Wahrscheinlichkeiten für die Signalzustände mehrerer Signalgruppen der Signalanlage, insbesondere für alle Signalgruppen der Signalanlage aufweisen. Die gemessenen Ausgangsvektoren werden mit den berechneten Ausgansvektoren verglichen. Durch eine entsprechende Anpassung der Matrizen A, B und C werden die berechneten Ausgangsvektoren an die gemessenen Ausgangsvektoren angepasst. Ist der Unterschied zwischen dem berechneten Ausgangsvektor und dem gemessenen Ausgangsvektor für jeden Parameter kleiner als beispielsweise 5%, dann wird das Lernverfahren beendet und das Modell bzw. das zweite neuronale Netz mit den Matrizen A, B, C beibehalten. Dieses Modell wird für eine zukünftige Vorhersage von Schaltzeitpunkten und/oder von Wahrscheinlichkeiten der Signalzustände von der Recheneinheit 4 verwendet.

In einer weiteren Ausführungsform kann als zweites neuronales Netz ein rekurrentes neuronales Netz mit einer Fehlerkorrektur verwendet werden. Bei diesem Verfahren kann das System mit folgenden Gleichungen beschrieben werden.

$$s_t = f(s_{t-1}, u_t, y_{t-1} - y_{t-1}^d)$$
$$y_t = g(s_t) \qquad\qquad (1.9)$$

Dabei ist $y_t^d$ der tatsächlich gemessene Ausgangsvektor zum Zeitpunkt t. Auf Basis der Gleichungen 1.9 kann ein neuronales Netz mit einer Fehlerkorrektur mit folgenden Gleichungen formuliert werden:

$$s_t = tanh(As_{t-1} + Bu_t + D\,tanh(Cs_{t-1} - y_{t-1}^d))$$
$$y_t = Cs_t \qquad\qquad (1.12)$$

Dieses Gleichungssystem wird mithilfe einer Parameteroptimierung ermittelt, wobei die vier Matrizen A, B, C und D nach folgender Vorschrift ermittelt werden:

$$\frac{1}{T}\sum_{t=1}^{T}(y_t - y_t^d)^2 \rightarrow \min_{A,B,C,D}$$

(1.13)

Eine weitere Beschreibung der möglichen zu verwendenden neuronalen Netze für die Realisierung der künstlichen Intelligenz kann dem Artikel Zimmermann HG., Neuneier R., Grothmann R. (2002) Modeling Dynamical Systems by Error Correction Neural Networks. In: Soofi A.S., Cao L. (eds) Modelling and Forecasting Financial Data. Studies in Computational Finance, vol 2. Springer, Boston, MA entnommen werden. Zudem sind entsprechende neuronale Netze in EP 1 252 566 B1 beschrieben.

Figur 4 zeigt in einer schematischen Darstellung ein erstes neuronales Netz mit der Struktur eines geschlossenen, historisch konsistenten neuronalen Netzes, wobei die Funktionsweise des Netzes für zeitlich aufeinander folgende Berechnungsschritte dargestellt ist. Es ist schematisch ein Zeitstrahl für die Zeit t dargestellt, wobei die Zeit t nach rechts in die Zukunft führt. Es sind jeweils Zeitpunkte t-3, t-2, t-1, t für Berechnungsschritte des neuronalen Netzes dargestellt. Der zeitliche Verlauf startet in dem dargestellten Ausführungsbeispiel mit dem Zeitpunkt t-3 und geht über die Zeitpunkte t-2, t-1, zum aktuellen Zeitpunkt t.

Das erste neuronale Netz ist beispielsweise in Form von Hardware und/oder Software in einem Computer realisiert. Der Computer ist eine beliebige Recheneinheit, beispielsweise ein Feldgerät.

Die gewählte Darstellung ist in Bezug auf die Anzahl der Berechnungszeitpunkte t nur schematisch dargestellt, da die Zeitpunkte, zu denen Berechnungen durchgeführt werden, sich bei realen Fällen beispielsweise von einem Zeitpunkt von t-432, $t$ - 288 oder $t$ - 120 bis zum aktuellen Zeitpunkt t erstrecken können.

Das erste neuronale Netz verwendet einen internen Zustandsvektor $s_t$, der neben Nicht-Observablen, d.h. versteckten Variablen, eine festgelegte Anzahl von Observablen, d.h. messbaren Größen aufweist. Bei einem Startpunkt 40 des Verfahrens werden die Werte der Observablen und der Nicht-Observablen des internen Zustandsvektors mit Startwerten belegt, welche einen Bias-Vektor $s_0$ bilden. Die Startwerte des Bias-Vektors $s_0$ können im Rahmen des Trainings des ersten neuronalen Netzes ermittelt werden. In dem dargestellten Beispiel wird aus dem Bias-Vektor $s_0$ zum Zeitpunkt $t$ - 3 der interne Zustandsvektor $s_{t-3}$ gebildet, der die Startwerte für die Observablen und die Nicht-Observablen aufweist und in einer Speichereinheit 26 gespeichert wird. Der Index t-3 gibt den Zeitpunkt für den Berechnungsschritt an.

Zudem werden zum Zeitpunkt t-3 über einen ersten Dateneingang 21 reale Zustandsinformationen, welche die Schaltzeitpunkte einer Signalgruppe einer Signalanlage beeinflussen, in Form eines externen Zustandsvektors

$y_{t-3}^d$

mit mehreren externen Zustandswerten eingelesen. Die externen Zustandswerte stellen beispielsweise aktuelle Signalgruppen-Zustände, System-Zustände, Detektor-Werte und ÖV-Telegramme dar. Die externen Zustandswerte werden mit einem negativen Vorzeichen einer ersten Verarbeitungseinheit 22 zugeführt. Zudem wird eine oberste erste festgelegte Anzahl n von Observablen des internen Zustandsvektors $s_{t-3}$ ebenfalls der ersten Verarbeitungseinheit 22 zugeführt. Die erste festgelegte Anzahl n entspricht der Anzahl der externen Zustandswerte des externen Zustandsvektors

tors $y_{t-3}^d$ .

Die erste Verarbeitungseinheit 22 ermittelt jeweils die Differenz zwischen den realen Zustandsinformationen des externen Zustandsvektors $y_{t-3}^d$ und den Werten der Observablen des internen Zustandsvektors $s_{t-3}$, welche den externen Zustandswerten entsprechen und diese schätzen. Für jeden externen Zustandswert weist der interne Zustandsvektor eine Observable auf. Die Differenzen zwischen jedem (gemessenen bzw. realen) externen Zustandswert des externen Zustandsvektors $y_{t-3}^d$ und dem Wert der entsprechenden Observablen des internen Zustandsvektors $s_{t-3}$ zum Zeitpunkt $t$ - 3 werden als erster Fehlervektor mit negativen Kennzeichen einer dritten Verarbeitungseinheit 23 zugeführt. Hierbei können noch weitere Verarbeitungsschritte erfolgen, welche weiter unten erläutert sind; der erste Fehlervektor wird dann also vor der Zuführung zur dritten Verarbeitungseinheit 23 zunächst noch weiterverarbeitet. An die dritte Verarbeitungseinheit 23 wird zudem der interne Zustandsvektor $s_{t-3}$ übermittelt.

Die dritte Verarbeitungseinheit 23 verwendet eine Aktivierungsfunktion, die in diesem Beispiel als Tangens hyperbolicus Funktion (tan $h$) ausgebildet ist, und führt folgende Berechnung durch:

$$\tanh\left(s_{t-3} + \begin{bmatrix} -Id \\ 0 \end{bmatrix} \cdot \left([Id,0]s_{t-3} - y_{t-3}^d\right)\right)$$

$\begin{bmatrix} -Id \\ 0 \end{bmatrix}$ bezeichnet eine diagonale negative Einheitsmatrix, deren Dimension gleich der Dimension der Anzahl der Komponenten des jeweiligen Vektors ist, mit dem die Matrix multipliziert wird. Die ersten n diagonalen Elemente der Matrix weisen den Wert -1 auf. Alle anderen Werte der Matrix haben den Wert 0.

[*Id*, 0] bezeichnet eine diagonale positive Einheitsmatrix, deren Dimension gleich der Dimension der Anzahl der Komponenten des jeweiligen Vektors ist, mit dem die Matrix multipliziert wird. Die ersten n diagonalen Elemente der Matrix weisen den Wert +1 auf. Alle anderen Werte der Matrix haben den Wert 0.

Das Ergebnis der dritten Verarbeitungseinheit 23 wird als zeitlich folgender interner Zustandsvektor $s_{t-2}$ in die Speichereinheit 26 geschrieben, welcher nach folgender Formel berechnet wird, wobei eine Matrix A berücksichtigt wird:

$$s_{t-2} = A \cdot \tanh\left(s_{t-3} + \begin{bmatrix} -Id \\ 0 \end{bmatrix} \cdot \left([Id,0]s_{t-3} - y_{t-3}^d\right)\right)$$

Die dritte Verarbeitungseinheit 23 kann anstelle der Funktion tan *h* auch eine andere Aktivierungsfunktion, insbesondere eine Sigmoidfunktion verwenden.

Die Matrix *A* ist eine zweidimensionale Matrix, die als Elemente Gewichtungsfaktoren aufweist. Sie wird während des Trainings des ersten neuronalen Netzes mit optimierten Gewichtungsfaktoren erstellt.

Im Folgenden werden die genannten Elemente der Figur 4 genauer in ihrem Zusammenwirken erläutert.

Der externe Zustandsvektor $y_{t-3}^d$ weist wenigstens einen externen Zustandswert, insbesondere mehrere externe Zustandswerte etwa von verschiedenen Detektoren und Steuereinheiten auf. Der tiefgestellte Index t-3 gibt den Zeitpunkt an, für den die externen Zustandswerte ermittelt wurden. Der externe Zustandsvektor $y_{t-3}^d$ kann z.B. folgende externe Zustandswerte aufweisen:

$$y_{t-3}^d = \texttt{(Signalgruppen-Zustände, System-Zustände, Detektor-Werte, ÖV-Telegramme)}$$

Der interne Zustandsvektor $s_{t-3}$ weist als Observablen und Nicht-Observablen beispielsweise folgende vorhergesagte bzw. prädizierte Daten auf:

$s_{t-3}$ = (Signalgruppen-Zustände, System-Zustände, Detektor-Werte, ÖV-Telegramme, erste Nicht-Observable, zweite Nicht-Observable, ..., m-te Nicht-Observable)

Somit weist der interne Zustandsvektor $s_{t-3}$ an einer ersten festgelegten Anzahl von n Positionen die vom neuronalen Netz vorhergesagten externen Zustandswerte auf.

Die erste Verarbeitungseinheit 22 verwendet die ersten n Observablen des internen Zustandsvektors $s_{t-3}$, deren Anzahl gleich der Anzahl der externen Zustandswerte des externen Zustandsvektors $y_{t-3}^d$ ist, und ermittelt für jede Position eine Differenz zwischen der Observablen und dem externen Zustandswert. Hierdurch wird ein Fehlervektor für die Zustandswerte gebildet, welcher folgendermaßen beschrieben werden kann:

$$\left([Id,0]s_{t-3} - y_{t-3}^d\right)$$

Der Ausgang der ersten Verarbeitungseinheit 22 steht mit einer vierten Verarbeitungseinheit 27 in Verbindung. Dabei führt die erste Verarbeitungseinheit 22 eine Vektorsubtraktion durch, wobei die ersten n Observablen des internen Zustandsvektors $s_{t-3}$ mit den negativen Werten der n Komponenten des externen Zustandsvektors $y_{t-3}^d$ addiert werden. Das Ergebnis wird an die vierte Verarbeitungseinheit 27 weitergegeben.

Zudem wird über einen Eingang 28 ein Maskierungsvektor $mask^{y}_{t-3}$ zugeführt, der Informationen enthält, welche der (gemessenen) externen Zustandswerte des externen Zustandsvektors $y^{d}_{t-3}$ korrekt sind, und welche externen Zustandswerte fehlerhaft sind oder fehlen. Der Maskierungsvektor mask $mask^{y}_{t-3}$ kann z.B. von einer lokalen oder externen Recheneinheit erstellt werden, die die eingehenden Signale mit den realen Zustandsinformationen überwacht und die darin enthaltenen externen Zustandswerte mithilfe festgelegter Verfahren überprüft und verifiziert.

Der Maskierungsvektor $mask^{y}_{t-3}$ enthält für die externen Zustandswerte, die gemessen wurden, den Wert 1, und für die externen Zustandswerte, die nicht gemessen wurden oder die fehlerhaft sind, den Wert 0 an der entsprechenden Position des Maskierungsvektors $mask^{y}_{t-3}$ .

Die vierte Verarbeitungseinheit 27 führt eine Vektormultiplikation mit dem Fehlervektor, der von der ersten Verarbeitungseinheit 22 ausgegeben wird, und dem Maskierungsvektor durch. Folglich werden bei dieser Vektormultiplikation in der vierten Verarbeitungseinheit 27 die entsprechenden Korrekturwerte, die von der ersten Verarbeitungseinheit 22 geliefert werden, auf den Wert 0 gesetzt und damit für die weitere Berechnung nicht verwendet, d.h. ausgeblendet. Liegen korrekte Sensordaten vor, so ist an den entsprechenden Stellen des Maskierungsvektors jeweils der Wert 1 abgelegt. Folglich werden dann bei der Vektormultiplikation in der vierten Verarbeitungseinheit 27 die entsprechenden Korrekturwerte, die von der ersten Verarbeitungseinheit 22 geliefert werden, mit dem Wert 1 multipliziert und damit für die weitere Berechnung verwendet und an die dritte Bearbeitungseinheit 23 weitergeleitet.

Das Ergebnis der Vektormultiplikation wird als Fehlervektor mit negativem Vorzeichen an die dritte Verarbeitungseinheit 23 weitergegeben.

Die dritte Verarbeitungseinheit 23 führt mit der Matrix A folgende Berechnung durch:

$$s_{t-2} = A \cdot \tan h \left( s_{t-3} + \begin{bmatrix} -Id \\ 0 \end{bmatrix} \cdot \left( mask^{y}_{t-3} \odot \left( [Id, 0] s_{t-3} - y^{d}_{t-3} \right) \right) \right)$$

Diese Rechnung wird für die folgenden Zeitpunkte $t$ - 2, $t$ - 1 und $t$ wiederholt. Dabei werden jeweils zu den Zeitpunkten $t$ - 2, $t$ - 1 und $t$ die gemessenen externen Zustandsvektoren $y^{d}_{t-2}$ , $y^{d}_{t-1}$, $y^{d}_{t}$ über den ersten Dateneingang 21 dem ersten neuronalen Netz zugeführt und entsprechend dem beschriebenen Verfahren verarbeitet. Dabei können auf einfache Weise fehlerhafte oder nicht zur Verfügung stehende externe Zustandswerte des externen Zustandsvektors $y^{d}_{t}$ ausgeblendet werden. Dazu wird der Maskierungsvektor $mask^{y}_{t}$ verwendet. Der tiefgestellte Index gibt den Zeitpunkt für die Berechnung an. Der Index y gibt an, dass es sich um den Maskierungsvektor für den externen Zustandsvektor $y^{d}_{t}$ handelt.

Figur 5 zeigt den Fall, dass für den aktuellen Zeitpunkt t kein Fehlervektor unter Berücksichtigung eines externen Zustandsvektors ermittelt wird, da die externen Zustandswerte für den aktuellen Zeitpunkt t nicht rechtzeitig empfangen werden. Stattdessen wird ein geschätzter Zustandsvektor $y_{t}$ ausgegeben, welcher die externen Zustandswerte schätzt.

Der interne Zustandsvektor $s_{t}$ für den aktuellen Zeitpunkt wird nach folgender Formel berechnet:

$$s_t = A \cdot \tanh( s_{t-1} )$$

Für den aktuellen Zeitpunkt t werden hierbei die ersten n Observablen des internen Zustandsvektors $s_{t}$ als geschätzte Zustandswerte ausgegeben, welche den geschätzten Zustandsvektor $y_{t}$ bilden.

Der zum aktuellen Zeitpunkt $t$ vom Computer ermittelte geschätzte Zustandsvektor $y_{t}$ weist beispielsweise folgende Zustandswerte auf:

$y_{t}$ = (Signalgruppen-Zustände, System-Zustände, Detektor-Werte, ÖV-Telegramme)

Versuche haben gezeigt, dass gute Ergebnisse mit einem internen Zustandsvektor $s_{t}$ erreicht werden, der insgesamt eine Anzahl von etwa 50 Nicht-Observablen aufweist. Abhängig von der gewählten Ausführungsform können auch mehr oder weniger Nicht-Observable verwendet werden. Je mehr Nicht-Observable verwendet werden, umso größer ist die Matrix *A* und umso aufwendiger ist das Training des ersten neuronalen Netzes.

Das erste neuronale Netz wird mit bekannten Trainingsverfahren wie beispielsweise Backpropagation trainiert, wobei die vom ersten neuronalen Netz für den aktuellen Zeitpunkt t geschätzten Zustandswerte bzw. der geschätzte Zustandsvektor $y_t$ mit den (tatsächlich auftretenden und gemessenen) externen Zustandswerten bzw. dem externen Zustandsvektor $y^d_t$ verglichen werden. Dabei werden die Gewichtsfaktoren der Matrix *A* so lange optimiert, bis das erste neuronale Netz die Zustandswerte bzw. Zustandsvektoren möglichst genau gemäß den gemessenen externen Zustandswerten für den aktuellen Zeitpunkt t ermittelt.

Wie bereits ausgeführt, können z.B. bis zu 288 oder bis zu 432 Berechnungsschritte der Vergangenheit mithilfe des ersten neuronalen Netzes berechnet werden. Die Berechnungsschritte können beispielsweise jeweils für Zeitpunkte in einem festen Zeittakt ausgeführt werden, die einen zeitlichen Abstand von jeweils einer Sekunde aufweisen.

In einem weiteren Ausführungsbeispiel, welches auf die im Kontext der Figuren 3 und 4 erläuterten Netzwerkarchitekturen zurückgreift, wird das in Figur 4 gezeigte erste neuronale Netz an das in Figur 3 gezeigte zweite neuronale Netz gekoppelt.

Hierzu wird, ausgehend von dem ersten neuronalen Netz in Figur 4, der interne Zustandsvektor $s_t$ für den aktuellen Zeitpunkt t aus der Speichereinheit 26 entnommen, mit der diagonalen positiven Einheitsmatrix [Id,0] multipliziert und anschließend als externer Parametervektor $u_t$ dem in Figur 3 gezeigten zweiten neuronalen Netz zugeführt. Jeglicher rückwärtsgerichtete Gradientenfluss vom zweiten neuronalen Netz in das erste neuronale Netz wird unterbunden.

Weiterhin ist hierbei zu beachten, dass die Matrix A des ersten neuronalen Netzes in Figur 4 und die Matrix A des zweiten neuronalen Netzes in Figur 3 unterschiedliche Matrizen sind.

Das zweite neuronale Netz kann hierbei auch eine andere Architektur haben als in Figur 3 gezeigt. Unterschiedliche Netzwerkarchitekturen, die in Betracht kommen, wurden bereits zuvor genannt; beispielsweise könnte das zweite neuronale Netz auch ein Feed-Forward-Netz sein.

Die Kombination des ersten neuronalen Netzes mit dem zweiten neuronalen Netz kann jeweils auch als Erweiterung der vorangegangenen Ausführungsbeispiele verstanden werden.

Alternativ kann die Kombination des ersten neuronalen Netzes mit dem zweiten neuronalen Netz auch als übergeordnetes drittes neuronales Netz mit einer heterogenen Architektur aufgefasst werden.

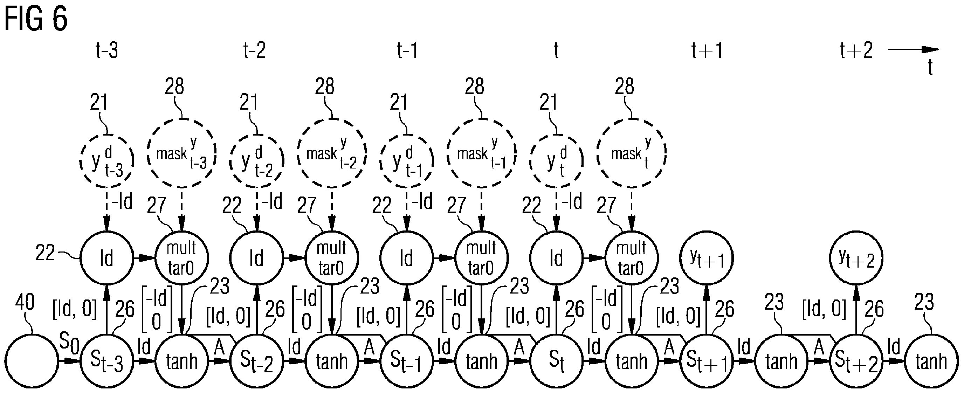

Figur 6 zeigt ein anderes Ausführungsbeispiel für ein drittes neuronales Netz, welches die Funktionen des ersten neuronalen Netzes aus Figur 4 oder Figur 5 und des zweiten neuronalen Netzes aus Figur 3 vereint und diese somit ersetzt.

Die Ausführungen zu Figur 4 gelten für das in Figur 6 gezeigte Ausführungsbeispiel vollumfänglich, da diese Teile der Architektur des dritten neuronalen Netzes mit der Architektur des ersten neuronalen Netzes übereinstimmen. Anstatt lediglich wie in Figur 5 gezeigt einen geschätzten Zustandsvektor $y_t$ ausgegeben, welcher die externen Zustandswerte für den aktuellen Zeitpunkt schätzt, und welcher von einer separaten künstlichen Intelligenz zur Vorhersage von Schaltzeitpunkten einer Signalgruppe einer Signalanlage genutzt wird, führt das in Figur 6 gezeigte dritte neuronale Netz diese Vorhersage selbst durch. Es sind jeweils Zeitpunkte t-3, t-2, t-1, t, t+1, t+2 für Berechnungsschritte des dritten neuronalen Netzes dargestellt.

Das dritte neuronale Netz ermittelt auch für zukünftige Zeitpunkte $t + 1$, $t + 2$, ... sowohl einen Zustandsvektor $s_{t+1}$, $s_{t+2}$, ... als auch geschätzte Zustandsvektoren $y_{t+1}$, $y_{t+2}$, .... Die in Figur 6 gewählte Darstellung ist in Bezug auf die Anzahl der Berechnungszeitpunkte *t* nur schematisch dargestellt, da die Zeitpunkte, zu denen Berechnungen durchgeführt werden, sich bei realen Fällen beispielsweise von einem Zeitpunkt von *t*-288 bis zu einem Zeitpunkt von $t + 144$ erstrecken können.

Nachdem die Berechnungen bis zum Zeitpunkt $t + 1$ wie im Kontext der Figur 4 bereits erläutert durchgeführt werden, werden die Berechnungen der dritten Verarbeitungseinheit 23 auch für zukünftige Zeitpunkte $t + 1$, $t + 2$, ... durchgeführt. Für die zukünftigen Zeitpunkte $t + 1$, $t + 2$, ... werden jedoch keine Fehlervektoren mehr unter Berücksichtigung externer Zustandsvektoren $y^d_t$ ermittelt, da diese realen Messungen noch nicht vorliegen.

Stattdessen werden für die zukünftigen Zeitpunkte $t + 1$, $t + 2$, ... geschätzte Zustandsvektoren $y_{t+1}$, $y_{t+1}$, ... ausgegeben, welche die externen Zustandswerte zu diesen Zeitpunkten schätzen.

Der interne Zustandsvektor $s_{t+1}$ für den Zeitpunkt $t + 1$ wird noch wie im Kontext der Figur 4 beschrieben berechnet:

$$s_{t+1} = A \cdot \tan h \left( s_t + \begin{bmatrix} -Id \\ 0 \end{bmatrix} \cdot \left( mask^y_t \odot \left( [Id,0] \, s_t - y^d_t \right) \right) \right)$$

Für den Zeitpunkt $t + 1$ werden hierbei die ersten n Observablen des internen Zustandsvektors $s_t$ als geschätzte

Zustandswerte ausgegeben, welche den geschätzten Zustandsvektor $y_{t+1}$ bilden.

Ab dem Zeitpunkt $t + 2$ wird der interne Zustandsvektor hingegen nach folgender Formel berechnet:

$$s_{t+2} = A \cdot \tanh( s_{t+1} )$$

Auch für den Zeitpunkt $t + 2$ und alle nachfolgenden Zeitpunkte werden hierbei die ersten n Observablen der internen Zustandsvektoren $s_{t+2}$, $s_{t+2}$,... als geschätzte Zustandswerte ausgegeben, welche die geschätzten Zustandsvektoren $y_{t+2}$, $y_{t+3}$, ... bilden.

Die ab den Zeitpunkten $t + 1$, $t + 2$, ... vom dritten neuronalen Netz ermittelten geschätzten Zustandsvektoren $y_{t+1}$, $y_{t+2}$, ... weisen beispielsweise folgende Zustandswerte auf:

$y_{t+1}$ = (Signalgruppen-Zustände, System-Zustände, Detektor-Werte, ÖV-Telegramme)

Somit liegen die für die Vorhersage der Schaltzeitpunkte der Signalgruppen der Signalanlage benötigten Informationen als Signalgruppen-Zustände für die zukünftigen Zeitpunkte $t + 1$, $t + 2$, ... unmittelbar in den geschätzten Zustandsvektoren $y_{t+1}$ , $y_{t+1}$, ... vor. Beispielsweise werden die Signalgruppen-Zustände als Teil der geschätzten Zustandsvektoren $y_{t+1}$, $y_{t+1}$, ... in sekündlichem Abstand bis zu einem Zeitpunkt $t + 120$ berechnet. Das dritte neuronale Netz sagt in diesem Szenario also für die kommenden 120 Sekunden die Signalgruppen-Zustände der Signalanlage voraus. Implizit liegen somit auch die Schaltzeitpunkte vor, da diese aus jeder Änderung der vorhergesagten Signalgruppen-Zustände unmittelbar hervorgehen. Ferner ist es auch möglich, dass die vorhergesagten Schaltzeitpunkte unmittelbar aus anderen Komponenten des geschätzten Zustandsvektors $y_t$ entnommen werden können, beispielsweise den System-Zuständen.

Versuche haben gezeigt, dass gute Ergebnisse mit einem internen Zustandsvektor $s_t$ erreicht werden, der insgesamt eine Anzahl von etwa 50 Nicht-Observablen aufweist. Abhängig von der gewählten Ausführungsform können auch mehr oder weniger Nicht-Observable verwendet werden. Je mehr Nicht-Observable verwendet werden, umso größer ist die Matrix $A$ und umso aufwendiger ist das Training des dritten neuronalen Netzes.

Das dritte neuronale Netz wird mit bekannten Trainingsverfahren wie beispielsweise Backpropagation trainiert, wie dies bereits für das in Figur 4 und Figur 5 gezeigte erste neuronale Netz erläutert wurde.

Beispielsweise können bis zu 288 Berechnungsschritte der Vergangenheit und bis zu 144 Berechnungsschritte in der Zukunft mithilfe des dritten neuronalen Netzes berechnet werden. Die Berechnungsschritte können beispielsweise jeweils für Zeitpunkte ausgeführt werden, die einen zeitlichen Abstand von jeweils einer Stunde aufweisen.

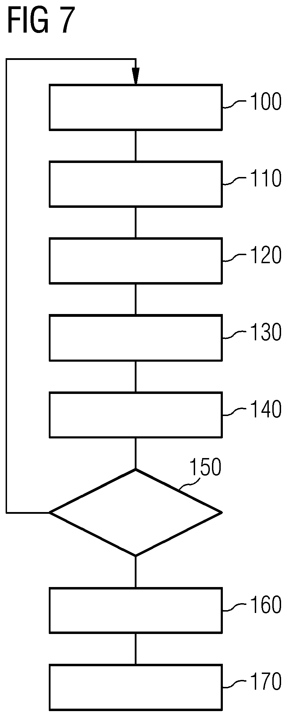

Figur 7 zeigt in einer schematischen Darstellung einen Programmablauf für ein Verfahren zur Vorhersage von Schaltzeitpunkten einer Signalgruppe einer Signalanlage.

Bei einem ersten Programmschritt 100 werden reale Zustandsinformationen in Form externer Zustandswerte unter anderem mithilfe von Sensoren über einen vorgegebenen Zeitraum erfasst. Die externen Zustandswerte können beispielsweise Signalgruppen-Zustände, System-Zustände, Detektor-Werte und ÖV-Telegramme enthalten. Sie werden Eingängen des zuvor beschriebenen ersten neuronalen Netzes zugeführt.

Bei einem zweiten Programmschritt 110 schätzt das erste neuronale Netz Zustandsinformationen für einen aktuellen Zeitpunkt.

Es wird davon ausgegangen, dass das erste neuronale Netz zu diesem Zeitpunkt bereits entsprechend trainiert wurde, sodass die Gewichtungsfaktoren der Matrix $A$ bereits für das vorliegende System optimiert wurden, wodurch bereits ein Prognosemodell zur Schätzung der Zustandsinformationen für den aktuellen Zeitpunkt vorliegt.

Bei einem dritten Programmschritt 120 wird überprüft, ob die realen Zustandsinformationen für den aktuellen Zeitpunkt rechtzeitig, vollständig und fehlerfrei empfangen wurden. Beispielsweise stellen die Sensoren hierzu Informationen bereit, welche der übermittelten externen Zustandswerte fehlen beziehungsweise defekt sind. Weiterhin kann eine Recheneinheit beispielsweise mithilfe von Plausibilitätsprüfungen überprüfen, ob die von den Sensoren gelieferten externen Zustandswerte defekt sind. Fehlen die Werte der Sensoren, so erkennt die Recheneinheit ein Fehlen der Sensordaten. Beispielsweise werden die realen Zustandsinformationen durch einen externen Zustandsvektor repräsentiert. Nun wird für sämtliche Komponenten des externen Zustandsvektors, also für jeden externen Zustandswert einzeln geprüft, ob dieser rechtzeitig und fehlerfrei für den aktuellen Zeitpunkt im festen Zeittakt eingetroffen ist. Diese Information wird für den folgenden Programmschritt benötigt.

Bei einem vierten Programmschritt 130 werden die realen Zustandsinformationen und/oder die geschätzten Zustandsinformationen für den aktuellen Zeitpunkt an das zuvor beschriebene zweite neuronale Netz übertragen. Hierbei ersetzen die geschätzten Zustandsinformationen die realen Zustandsinformationen als Ganzes oder deren Bestandteile, falls diese nicht rechtzeitig oder fehlerhaft empfangen wurden. Beispielsweise werden die Komponenten des externen Zustandsvektors, die nicht rechtzeitig und fehlerfrei für den aktuellen Zeitpunkt im festen Zeittakt eingetroffen sind, durch die entsprechenden Komponenten der geschätzten Zustandsinformationen ersetzt.

Bei einem fünften Programmschritt 140 verwendet eine Recheneinheit eine Software- und/oder Hardware-Struktur, um das zuvor beschriebene zweite neuronale Netz auszuführen und die Schaltzeitpunkte vorherzusagen.

Es wird davon ausgegangen, dass das zweite neuronale Netz zu diesem Zeitpunkt bereits entsprechend trainiert wurde, sodass die Gewichtungsfaktoren der Matrix *A* bereits optimiert wurden, wodurch bereits ein Prognosemodell zur Vorhersage der Schaltzeitpunkte vorliegt.

Anschließend wird zu einem sechsten Programmschritt 150 verzweigt, bei dem die Abfrage erfolgt, ob eine festgelegte Mindestanzahl von Berechnungen in der Vergangenheit mit dem ersten neuronalen Netz und dem zweiten neuronalen Netz durchgeführt wurde. Ist dies nicht der Fall, so wird zu dem ersten Programmschritt 100 zurückverzweigt und es werden weitere Messungen und Berechnungen durchgeführt.

Beispielsweise kann die Anzahl der Berechnungen in die Vergangenheit über einen Zeitraum von mehreren Minuten oder Stunden festgelegt sein. Zudem können Berechnungen typischerweise für jede Sekunde durchgeführt werden.

Ergibt die Abfrage bei dem sechsten Programmschritt 150, dass über den festgelegten vergangenen Zeitraum Berechnungen mit dem ersten neuronalen Netz und dem zweiten neuronalen Netz durchgeführt wurden, dann wird zu einem siebten Programmschritt 160 verzweigt.

Bei dem siebten Programmschritt 160 wird die Vorhersage des zweiten neuronalen Netzes ausgegeben.

Die Vorhersage der Schaltzeitpunkte wird bei einem achten Programmschritt 170 beispielsweise an Fahrzeuge in der Umgebung übermittelt. Die Fahrzeuge können diese Information daraufhin beispielsweise nutzen, um angepasste Fahrassistenzempfehlungen zur Fahrgeschwindigkeit an einen Fahrer auszugeben oder eine Routenplanung entsprechend anzupassen.

Alternativ können die Vorhersagen auch unmittelbar verwendet werden, wodurch die Abfrage im sechsten Programmschritt 150 entfällt. Weiterhin kann sich die Abfrage im sechsten Programmschritt 150 nur auf das erste neuronale Netz, nur auf das zweite neuronale Netz oder auf beide neuronale Netze beziehen.

Die vorherigen Ausführungen zu dem ersten neuronalen Netz und dem zweiten neuronalen Netz gelten in ähnlicher Weise für das dritte neuronale Netz, welches die Funktionen des ersten neuronalen Netzes und des zweiten neuronalen Netzes vereint. Der Grundgedanke ist hierbei, dass dem dritten neuronalen Netz zunächst für einen Zeitraum von beispielsweise 120 Sekunden reale Zustandsinformationen zugeführt werden, bevor begonnen wird, die Vorhersagen des dritten neuronalen Netzes zu verwenden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.


**Patentansprüche**

1.  Verfahren zur Vorhersage von Schaltzeitpunkten einer Signalgruppe einer Signalanlage zur Steuerung eines Verkehrsflusses, bei dem

    reale Zustandsinformationen (..., y<d>t-3, y<d>t-2, y<d>t-i, y<d>t), welche die Schaltzeitpunkte der Signalgruppe beeinflussen, in einem festen Zeittakt empfangen werden, und
    eine Recheneinheit in dem festen Zeittakt mithilfe einer künstlichen Intelligenz, welcher die realen Zustandsinformationen (..., y<d>t-3, y<d>t-2, y<d>t-i, y<d>t) zugeführt werden, mindestens einen Schaltzeitpunkt der Signalgruppe vorhersagt,
    **dadurch gekennzeichnet, dass**
    die realen Zustandsinformationen (..., y<d>t-3, y<d>t-2, y<d>t-i, y<d>t) einem ersten neuronalen Netz als Eingangssignale zu geführt werden,
    das erste neuronale Netz als Ersatz für reale Zustandsinformationen (y<d>t) oder Bestandteile der realen Zustandsinformationen (y<d>t), welche für einen aktuellen Zeitpunkt (t) nicht rechtzeitig oder fehlerhaft in dem festen Zeittakt empfangen werden, geschätzte Zustandsinformationen (yt) berechnet, und
    das erste neuronale Netz die geschätzten Zustandsinformationen (yt) für den aktuellen Zeitpunkt (t) in dem festen Zeittakt an die künstliche Intelligenz ausgibt, wobei die geschätzten Zustandsinformationen (yt) die realen Zustandsinformationen (y<d>t) oder die Bestandteile der realen Zustandsinformationen (y<d>t) ersetzen, welche nicht rechtzeitig oder fehlerhaft empfangen wurden,
    oder **dadurch gekennzeichnet, dass**
    die künstliche Intelligenz ein drittes neuronales Netz ist, welchem die realen Zustandsinformationen (..., y<d>t-3, y<d>t-2/y<d>t-i, y<d>t) als Eingangssignale zugeführt werden,
    das dritte neuronale Netz als Ersatz für reale Zustandsinformationen (y<d>t) oder Bestandteile der realen Zustandsinformationen (y<d>t), welche für einen aktuellen Zeitpunkt (t) nicht rechtzeitig oder fehlerhaft in dem festen Zeittakt empfangen werden, geschätzte Zustandsinformationen (yt) berechnet, und
    das dritte neuronale Netz die geschätzten Zustandsinformationen (yt) für den aktuellen Zeitpunkt (t) in dem festen Zeittakt verwendet, um den mindestens einen Schaltzeitpunkt der Signalgruppe vorherzusagen, wobei die geschätzten Zustandsinformationen (yt) die realen Zustandsinformationen (y<d>t) oder die Bestandteile der realen Zustandsinformationen (y<d>t) ersetzen, welche nicht rechtzeitig oder fehlerhaft empfangen wurden, wobei durch das erste neuronale Netz oder das dritte neuronale Netz Zustandsinformationen für einen aktuellen Zeitpunkt geschätzt werden, wobei darauffolgend überprüft wird, ob die aktuellen Zustandsinformationen für den aktuellen Zeitpunkt rechtzeitig, vollständig und fehlerfrei empfangen wurden, und wobei darauffolgend die realen Zustandsinformationen (..., y<d>t-3, y<d>t-2, y<d>t-i, y<d>t) durch die geschätzten Zustandsinformationen ersetzt werden, falls die realen Zustandsinformationen nicht rechtzeitig oder fehlerhaft empfangen wurden.

2. Verfahren nach Anspruch 1, bei dem die realen Zustandsinformationen (..., y<d>t-3, y<d>t-2, y<d>t-i, y<d>t) enthalten:

Signalgruppen-Zustände, insbesondere von der Signalanlage und/oder von mehreren oder allen Signalanlagen in einem Gebiet,
System-Zustände, insbesondere von einer Steuereinheit der Signalanlage und/oder von Steuereinheiten von mehreren oder allen Signalanlagen in einem Gebiet,
Detektor-Werte, insbesondere von der Signalanlage und/oder von mehreren oder allen Signalanlagen in einem Gebiet, und/oder
Nachrichten von Fahrzeugen, insbesondere Meldungen und/oder Anforderungen von öffentlichen Transportmitteln, insbesondere ÖV-Telegramme.

3. Verfahren nach einem der vorhergehenden Ansprüche, bei dem das erste neuronale Netz oder das dritte neuronale Netz ein historisch konsistentes neuronales Netz ist, welches in dem festen Zeittakt fortlaufend die geschätzten Zustandsinformationen (yt) für den aktuellen Zeit punkt (t) berechnet.

4. Verfahren nach Anspruch 3, bei dem, falls die realen Zustandsinformationen (y<d>t) für den aktuellen Zeitpunkt (t) rechtzeitig im festen Zeittakt empfangen werden, das erste neuronale Netz eine Abweichung zwischen den realen Zustandsinformationen (y<d>t) und den geschätzten Zustandsinformationen (yt) für den aktuellen Zeitpunkt (t) bestimmt und zur Fehlerkorrektur nutzt, und der künstlichen Intelligenz die realen Zustandsinformationen (y<d>t) für den aktuellen Zeitpunkt (t) im festen Zeittakt zugeführt werden.

5. Verfahren nach Anspruch 3 oder 4,

bei dem vergangene reale Zustandsinformationen (..., y<d>t-3, y<d>t-2/y<d>t-i) für einen vergangenen Zeitpunkt (..., t-3, t-2, t-1) nachträglich verspätet empfangen werden, und
bei dem das erste neuronale Netz oder das dritte neuronale Netz eine Abweichung zwischen den vergangenen realen Zustandsinformationen (..., y<d>t-3, Y<d>t-2 r y<d>t-i) und vergangenen geschätzten Zustandsinformationen (..., yt-3, yt-2, yt-i) bestimmt und zur Fehlerkorrektur nutzt.

6. Verfahren nach einem der vorhergehenden Ansprüche, wobei das erste neuronale Netz und/oder die künstliche Intelligenz, oder das dritte neuronale Netz, in einer externen Recheneinheit, insbesondere in einer Cloud, ausgeführt werden.

7. Verfahren nach einem der vorhergehenden Ansprüche, bei dem das erste neuronale Netz oder das dritte neuronale Netz mit realen Zustandsinformationen (..., y<d>t-3, y<d>t-2/y<d>ti, y<d>t) vorab derart trainiert wird, dass es die Schätzung der Zustandsinformationen (yt) für den aktuellen Zeitpunkt (t) erlernt.

8. Verfahren nach Anspruch 7, bei dem wenigstens ein Teil des Trainings des ersten neuronalen Netzes oder des dritten neuronalen Netzes in einer externen Recheneinheit, insbesondere in einer Cloud, durchgeführt wird, und bei dem nach dem Abschluss des Trainings das trainierte erste neuronale Netz oder das trainierte dritte neuronale Netz an eine Recheneinheit der Signalanlage übertragen wird.

9. Verfahren nach Anspruch 7, bei dem das erste neuronale Netz oder das dritte neuronale Netz während des Betriebs der Signalanlage und der Vorhersage der Schaltzeitpunkte in vorgegebenen Zeitabständen trainiert wird und daraufhin das neu trainierte erste neuronale Netz oder das neu trainierte dritte neuronale Netz verwendet wird.

10. Verfahren nach einem der vorhergehenden Ansprüche, bei dem das erste neuronale Netz oder das dritte neuronale Netz mindestens eine Zustandsinformation mit weiteren Nicht-Observablen in einem internen Zustandsvektor verarbeitet.

**11.** Computerlesbarer Datenträger, auf dem ein Computerprogramm gespeichert ist, welches das Verfahren nach einem der Ansprüche 1 bis 10 ausführt, wenn es in einem Prozessor abgearbeitet wird.

**12.** Computerprogramm, welches in einem Prozessor abgearbeitet wird und dabei das Verfahren nach einem der Ansprüche 1 bis 10 ausführt.

**13.** Anordnung zur Vorhersage von Schaltzeitpunkten einer Signalgruppe einer Signalanlage zur Steuerung eines Verkehrsflusses,

mit einer Schnittstelle, eingerichtet zum Empfang realer Zustandsinformationen ($..., y^d_{t-3}, y^d_{t-2}, y^d_{t-i}, y^d_t$), welche die Schaltzeitpunkte der Signalgruppe beeinflussen, in einem festen Zeittakt,

mit einer Recheneinheit, eingerichtet zur Vorsage mindestens eines Schaltzeitpunkts der Signalgruppe in dem festen Zeittakt mithilfe einer künstlichen Intelligenz, welcher die realen Zustandsinformationen ($..., y^d_{t-3}, y^d_{t-2}, y^d_{t-i}, y^d_t$) zugeführt werden,

**gekennzeichnet durch**

ein erstes neuronales Netz, welchem die realen Zustandsinformationen ($..., y^d_{t-3}, y^d_{t-2}, y^d_{t-i}, y^d_t$) als Eingangssignale zugeführt werden,

wobei das erste neuronale Netz eingerichtet ist, als Ersatz für reale Zustandsinformationen ($y^d_t$) oder Bestandteile der realen Zustandsinformationen ($y^d_t$), welche für einen aktuellen Zeitpunkt (t) nicht rechtzeitig oder fehlerhaft in dem festen Zeittakt empfangen werden, geschätzte Zustandsinformationen ($y_t$) zu berechnen, und wobei die Anordnung eingerichtet ist, die geschätzten Zustandsinformationen ($y_t$) für den aktuellen Zeitpunkt (t) in dem festen Zeittakt an die künstliche Intelligenz auszugeben, wobei die geschätzten Zustandsinformationen ($y_t$) die realen Zustandsinformationen ($y^d_t$) oder die Bestandteile der realen Zustandsinformationen ($y^d_t$) ersetzen, welche nicht rechtzeitig oder fehlerhaft empfangen wurden,

oder **gekennzeichnet durch**

ein drittes neuronales Netz, welches die künstliche Intelligenz implementiert und welchem die realen Zustandsinformationen ($..., y^d_{t-3}, y^d_{t-2}, y^d_{t-i}, y^d_t$) als Eingangssignale zugeführt werden,

wobei das dritte neuronale Netz eingerichtet ist, als Ersatz für reale Zustandsinformationen ($y^d_t$) oder Bestandteile der realen Zustandsinformationen ($y^d_t$), welche für einen aktuellen Zeitpunkt (t) nicht rechtzeitig oder fehlerhaft in dem festen Zeittakt empfangen werden, geschätzte Zustandsinformationen ($y_t$) zu berechnen, und wobei das dritte neuronale Netz eingerichtet ist, die geschätzten Zustandsinformationen ($y_t$) für den aktuellen Zeitpunkt (t) zur Vorsage des mindestens einen Schaltzeitpunkts der Signalgruppe in dem festen Zeittakt zu verwenden, wobei die geschätzten Zustandsinformationen ($y_t$) die realen Zustandsinformationen ($y^d_t$) oder die Bestandteile der realen Zustandsinformationen ($y^d_t$) ersetzen, welche nicht rechtzeitig oder fehlerhaft empfangen wurden,

wobei das erste neuronale Netz oder das dritte neuronale Netz eingerichtet sind, Zustandsinformationen für einen aktuellen Zeitpunkt zu schätzen, wobei die Anordnung eingerichtet ist, darauffolgend zu überprüfen, ob die aktuellen Zustandsinformationen für den aktuellen Zeitpunkt rechtzeitig, vollständig und fehlerfrei empfangen wurden, und wobei die Anordnung eingerichtet ist, darauffolgend die realen Zustandsinformationen ($..., y^d_{t-3}, y^d_{t-2}, y^d_{t-i}$) durch die geschätzten Zustandsinformationen zu ersetzen, falls die realen Zustandsinformationen nicht rechtzeitig oder fehlerhaft empfangen wurden.

**Claims**

**1.** Method for predicting switching times of a signal group of a signal installation for controlling a flow of traffic, in which

real state information ($..., y^d_{t-3}, y^d_{t-2}, y^d_{t-i}, y^d_t$), which influences the switching times of the signal group, is received at a fixed clock rate, and
a computing unit predicts at least one switching time of the signal group at the fixed clock rate by using artificial intelligence to which the real state information ($..., y^d_{t-3}, y^d_{t-2}, y^d_{t-i}, y^d_t$) is supplied,
**characterized in that**
the real state information ($..., y^d_{t-3}, y^d_{t-2}, y^d_{t-i}, y^d_t$) is supplied to a first neural network as input signals,
the first neural network computes estimated state information ($y_t$) as a replacement for real state information ($y^d_t$) or parts of the real state information ($y^d_t$) that is/are not received on time or is/are received erroneously for a current time (t) at the fixed clock rate, and

the first neural network outputs the estimated state information (yt) for the current time (t) to the artificial intelligence at the fixed clock rate, the estimated state information (yt) replacing the real state information (y<d>t) or the parts of the real state information (y<d>t) that was/were not received on time or was/were received erroneously,

or **characterized in that**

the artificial intelligence is a third neural network to which the real state information (..., y<d>t-3, y<d>t-2/y<d>t-i, y<d>t) is supplied as input signals,

the third neural network computes estimated state information (yt) as a replacement for real state information (y<d>t) or parts of the real state information (y<d>t) that is/are not received on time or is/are received erroneously for a current time (t) at the fixed clock rate, and

the third neural network uses the estimated state information (yt) for the current time (t) at the fixed clock rate in order to predict the at least one switching time of the signal group, the estimated state information (yt) replacing the real state information (y<d>t) or the parts of the real state information (y<d>t) that was/were not received on time or was/were received erroneously,

wherein the first neural network or the third neural network estimates state information for a current time, wherein it is then checked whether the current state information for the current time was received on time, completely and correctly, and wherein the real state information (..., y<d>t-3, y<d>t-2, y<d>t-i, y<d>t) is then replaced with the estimated state information if the real state information was not received on time or was received erroneously.

2. Method according to Claim 1, in which the real state information (..., y<d>t-3, y<d>t-2, y<d>t-i, y<d>t) includes:

signal group states, in particular from the signal installation and/or from multiple or all signal installations in an area,

system states, in particular from a control unit of the signal installation and/or from control units of multiple or all signal installations in an area,

detector values, in particular from the signal installation and/or from multiple or all signal installations in an area, and/or

messages from vehicles, in particular reports and/or requests from public means of transport, in particular public transport telegrams.

3. Method according to either of the preceding claims, in which the first neural network or the third neural network is a historically consistent neural network that continually computes the estimated state information (yt) for the current time (t) at the fixed clock rate.

4. Method according to Claim 3, in which, if the real state information (y<d>t) for the current time (t) is received on time at the fixed clock rate, the first neural network determines an inconsistency between the real state information (y<d>t) and the estimated state information (yt) for the current time (t) and uses said inconsistency for error correction, and the artificial intelligence is supplied with the real state information (y<d>t) for the current time (t) at the fixed clock rate.

5. Method according to Claim 3 or 4,

in which past real state information (..., y<d>t-3, y<d>t-2/y<d>t-i) for a past time (..., t-3, t-2, t-1) is received subsequently behind time, and

in which the first neural network or the third neural network determines an inconsistency between the past real state information (..., y<d>t-3, Y<d>t-2 r y<d>t-i) and past estimated state information (..., yt-3, yt-2, yt-i) and uses said inconsistency for error correction.

6. Method according to one of the preceding claims, wherein the first neural network and/or the artificial intelligence, or the third neural network, are executed in an external computing unit, in particular in a cloud.

7. Method according to one of the preceding claims, in which the first neural network or the third neural network is trained with real state information (..., y<d>t-3, y<d>t-2/y<d>t-i, y<d>t) beforehand in such a way that it learns the estimate of the state information (yt) for the current time (t).

8. Method according to Claim 7, in which at least part of the training of the first neural network or of the third neural network is carried out in an external computing unit, in particular in a cloud, and in which after the conclusion of the training the trained first neural network or the trained third neural network is transmitted to a computing unit of the signal installation.

9. Method according to Claim 7, in which the first neural network or the third neural network is trained at predefined intervals of time during the operation of the signal installation and the prediction of the switching times, and then the newly trained first neural network or the newly trained third neural network is used.

10. Method according to one of the preceding claims, in which the first neural network or the third neural network processes at least one piece of state information containing further non-observables in an internal state vector.

11. Computer-readable data carrier, which stores a computer program that performs the method according to one of Claims 1 to 10 when it is executed in a processor.

12. Computer program, which is executed in a processor and performs the method according to one of Claims 1 to 10 in the process.

13. Arrangement for predicting switching times of a signal group of a signal installation for controlling a flow of traffic,

having an interface, configured to receive real state information (..., y<d>t-3, y<d>t-2, y<d>t-i, y<d>t), which influences the switching times of the signal group, at a fixed clock rate,
having a computing unit, configured to predict at least one switching time of the signal group at the fixed clock rate by using artificial intelligence to which the real state information (..., y<d>t-3, y<d>t-2, y<d>t-i, y<d>t) is supplied,
**characterized by**
a first neural network to which the real state information (..., y<d>t-3, y<d>t-2, y<d>t-i, y<d>t) is supplied as input signals,
wherein the first neural network is configured to compute estimated state information (yt) as a replacement for real state information (y<d>t) or parts of the real state information (y<d>t) that is/are not received on time or is/are received erroneously for a current time (t) at the fixed clock rate,
and wherein the arrangement is configured to output the estimated state information (yt) for the current time (t) to the artificial intelligence at the fixed clock rate, the estimated state information (yt) replacing the real state information (y<d>t) or the parts of the real state information (y<d>t) that was/were not received on time or was/were received erroneously,
or **characterized by**
a third neural network, which implements the artificial intelligence and to which the real state information (..., y<d>t-3, y<d>t-2, y<d>t-i, y<d>t) is supplied as input signals,
wherein the third neural network is configured to compute estimated state information (yt) as a replacement for real state information (y<d>t) or parts of the real state information (y<d>t) that is/are not received on time or is/are received erroneously for a current time (t) at the fixed clock rate, and
wherein the third neural network is configured to use the estimated state information (yt) for the current time (t) at the fixed clock rate in order to predict the at least one switching time of the signal group, the estimated state information (yt) replacing the real state information (y<d>t) or the parts of the real state information (y<d>t) that was/were not received on time or was/were received erroneously,
wherein the first neural network or the third neural network is configured to estimate state information for a current time, wherein the arrangement is configured to then check whether the current state information for the current time was received on time, completely and correctly, and wherein the arrangement is configured to then replace the real state information (..., y<d>t-3, y<d>t-2, y<d>t-i, y<d>t) with the estimated state information if the real state information was not received on time or was received erroneously.

**Revendications**

1. Procédé de prédiction d'instants de commutation d'un groupe de signaux d'un équipement de signalisation en vue de commander un flux de trafic, avec lequel

des informations d'état réelles (..., y<d>t-3, y<d>t-2, y<d>t-i, y<d>t), qui influencent les instants de commutation du groupe de signaux, sont reçues dans un rythme de temps fixe, et
une unité de calcul prédit au moins un instant de commutation du groupe de signaux dans le rythme de temps fixe à l'aide d'une intelligence artificielle à laquelle sont acheminées les informations d'état réelles (..., y<d>t-3, y<d>t-2, y<d>t-i, y<d>t),
**caractérisé en ce que**

les informations d'état réelles (..., y<d>t-3, y<d>t-2, y<d>t-i, y<d>t) sont acheminées en tant que signaux d'entrée à un premier réseau neuronal,

le premier réseau neuronal calcule des informations d'état estimées (yt) en tant que remplacement des informations d'état réelles (y<d>t) ou d'éléments constitutifs des informations d'état réelles (y<d>t) qui ne sont pas reçus en temps voulu ou sont reçus de manière erronée pour un instant actuel (t) dans le rythme de temps fixe, et

le premier réseau neuronal délivre les informations d'état estimées (yt) pour l'instant actuel (t) dans le rythme de temps fixe à l'intelligence artificielle, les informations d'état estimées (yt) remplaçant les informations d'état réelles (y<d>t) ou les éléments constitutifs des informations d'état réelles (y<d>t) qui n'ont pas été reçus en temps voulu ou reçus de manière erronée,

ou **caractérisé en ce que**

l'intelligence artificielle est un troisième réseau neuronal auquel les informations d'état réelles (..., y<d>t-3, y<d>t-2, y<d>t-i, y<d>t) sont acheminées en tant que signaux d'entrée,

le troisième réseau neuronal calcule des informations d'état estimées (yt) en tant que remplacement des informations d'état réelles (y<d>t) ou d'éléments constitutifs des informations d'état réelles (y<d>t) qui ne sont pas reçus en temps voulu ou sont reçus de manière erronée pour un instant actuel (t) dans le rythme de temps fixe, et

le troisième réseau neuronal utilise les informations d'état estimées (yt) pour l'instant actuel (t) dans le rythme de temps fixe en vue de prédire l'au moins un instant de commutation du groupe de signaux, les informations d'état estimées (yt) remplaçant les informations d'état réelles (y<d>t) ou les éléments constitutifs des informations d'état réelles (y<d>t) qui n'ont pas été reçus en temps voulu ou reçus de manière erronée,

des informations d'état pour un instant actuel étant estimées par le premier réseau neuronal ou le troisième réseau neuronal, un contrôle étant ensuite effectué afin de vérifier si les informations d'état actuelle pour l'instant actuel ont été reçues en temps voulu, entièrement et sans erreur, et les informations d'état réelles (..., y<d>t-3, y<d>t-2, y<d>t-i, y<d>t) étant ensuite remplacées par les informations d'état estimées dans le cas où les informations d'état réelles n'ont pas été reçus en temps voulu ou reçus de manière erronée.

2. Procédé selon la revendication 1, avec lequel les informations d'état réelles (..., y<d>t-3, y<d>t-2, y<d>t-i, y<d>t) contiennent :

des états de groupes de signaux, notamment de l'équipement de signalisation et/ou de plusieurs ou de tous les équipements de signalisation dans une région,

des états de système, notamment d'une unité de commande de l'équipement de signalisation et/ou d'unités de commande de plusieurs ou de tous les équipements de signalisation dans une région,

des valeurs de détecteur, notamment de l'équipement de signalisation et/ou de plusieurs ou de tous les équipements de signalisation dans une région, et/ou des messages de véhicules, notamment des notifications et/ou des demandes de moyens de transport public, notamment des télégrammes de transport en commun.

3. Procédé selon l'une des revendications précédentes, avec lequel le premier réseau neuronal ou le troisième réseau neuronal est un réseau neuronal historiquement cohérent, lequel calcule continuellement les informations d'état réelles (y<d>t) pour l'instant actuel (t) dans le rythme de temps fixe.

4. Procédé selon la revendication 3, avec lequel, dans le cas où les informations d'état réelles (y<d>t) pour l'instant actuel (t) sont reçues en temps voulu dans le rythme de temps fixe, le premier réseau neuronal détermine un écart entre les informations d'état réelles (y<d>t) et les informations d'état estimées (yt) pour l'instant actuel (t) et les utilise pour la correction d'erreur, et les informations d'état réelles (y<d>t) pour l'instant actuel (t) sont acheminées à l'intelligence artificielle dans le rythme de temps fixe.

5. Procédé selon la revendication 3 ou 4,

avec lequel les informations d'état réelles passées (..., y<d>t-3, y<d>t-2, y<d>t-i) pour un instant passé (..., t-3, t-2, t-1) sont reçues retardées ultérieurement, et

avec lequel le premier réseau neuronal ou le troisième réseau neuronal détermine un écart entre les informations d'état réelles passées (..., y<d>t-3, y<d>t-2, y<d>t-i) et les informations d'état estimées passées (..., yt-3, yt-2, yt-i) et les utilise pour la correction d'erreur.

6. Procédé selon l'une des revendications précédentes, avec lequel le premier réseau neuronal et/ou l'intelligence artificielle ou le troisième réseau neuronal sont exécutés dans une unité de calcul externe, notamment dans un nuage.

7. Procédé selon l'une des revendications précédentes, avec lequel le premier réseau neuronal ou le troisième réseau neuronal sont préalablement entraînés avec des informations d'état réelles (..., y<d>t-3, y<d>t-2, y<d>t-i, y<d>t) de telle sorte qu'il apprend l'estimation des informations d'état (yt) pour l'instant actuel (t).

8. Procédé selon la revendication 7, avec lequel au moins une partie de l'entraînement du premier réseau neuronal ou du troisième réseau neuronal est effectuée dans une unité de calcul externe, notamment dans un nuage, et avec lequel, après l'achèvement de l'entraînement, le premier réseau neuronal entraîné ou le troisième réseau neuronal entraîné est transmis à une unité de calcul de l'équipement de signalisation.

9. Procédé selon la revendication 7, avec lequel le premier réseau neuronal ou le troisième réseau neuronal est entraîné pendant le fonctionnement de l'équipement de signalisation et la prédiction des instants de commutation dans des intervalles de temps prédéfinis et le premier réseau neuronal nouvellement entraîné ou le troisième réseau neuronal nouvellement entraîné et ensuite utilisé.

10. Procédé selon l'une des revendications précédentes, avec lequel le premier réseau neuronal ou le troisième réseau neuronal traitent au moins une information d'état avec des non observables supplémentaires dans un vecteur d'état interne.

11. Support de données lisible par ordinateur, sur lequel est enregistré un programme informatique, lequel met en oeuvre le procédé selon l'une des revendications 1 à 10 lorsqu'il est exécuté par un processeur.

12. Programme informatique, lequel est exécuté dans un processeur et met alors en oeuvre le procédé selon l'une des revendications 1 à 10.

13. Arrangement de prédiction d'instants de commutation d'un groupe de signaux d'un équipement de signalisation en vue de commander un flux de trafic,

comprenant une interface, conçue pour recevoir des informations d'état réelles (..., y<d>t-3, y<d>t-2, y<d>t-i, y<d>t), qui influencent les instants de commutation du groupe de signaux, dans un rythme de temps fixe,
comprenant une unité de calcul, conçue pour prédire au moins un instant de commutation du groupe de signaux dans le rythme de temps fixe à l'aide d'une intelligence artificielle à laquelle sont acheminées les informations d'état réelles (..., y<d>t-3, y<d>t-2, y<d>t-i, y<d>t),
**caractérisé par**
un premier réseau neuronal auquel les informations d'état réelles (..., y<d>t-3, y<d>t-2, y<d>t-i, y<d>t) sont acheminées en tant que signaux d'entrée,
le premier réseau neuronal étant conçu pour calculer des informations d'état estimées (yt) en tant que remplacement des informations d'état réelles (y<d>t) ou d'éléments constitutifs des informations d'état réelles (y<d>t) qui ne sont pas reçus en temps voulu ou sont reçus de manière erronée pour un instant actuel (t) dans le rythme de temps fixe,
et l'arrangement étant conçu pour délivrer les informations d'état estimées (yt) pour l'instant actuel (t) dans le rythme de temps fixe à l'intelligence artificielle, les informations d'état estimées (yt) remplaçant les informations d'état réelles (y<d>t) ou les éléments constitutifs des informations d'état réelles (y<d>t) qui n'ont pas été reçus en temps voulu ou reçus de manière erronée,
ou **caractérisé par**
un troisième réseau neuronal, lequel met en oeuvre l'intelligence artificielle est et auquel les informations d'état réelles (..., y<d>t-3, y<d>t-2, y<d>t-i, y<d>t) sont acheminées en tant que signaux d'entrée,
le troisième réseau neuronal étant conçu pour calculer les informations d'état estimées (yt) en tant que remplacement des informations d'état réelles (y<d>t) ou d'éléments constitutifs des informations d'état réelles (y<d>t) qui ne sont pas reçus en temps voulu ou sont reçus de manière erronée pour un instant actuel (t) dans le rythme de temps fixe, et
le troisième réseau neuronal étant conçu pour utiliser les informations d'état estimées (yt) pour l'instant actuel (t) dans le rythme de temps fixe en vue de prédire l'au moins un instant de commutation du groupe de signaux, les informations d'état estimées (yt) remplaçant les informations d'état réelles (y<d>t) ou les éléments constitutifs des informations d'état réelles (y<d>t) qui n'ont pas été reçus en temps voulu ou reçus de manière erronée,
le premier réseau neuronal ou le troisième réseau neuronal étant conçu pour estimer des informations d'état pour un instant actuel, l'arrangement étant conçu pour vérifier ensuite si les informations d'état actuelle pour l'instant actuel ont été reçues en temps voulu, entièrement et sans erreur, et l'arrangement étant conçu pour remplacer ensuite les informations d'état réelles (..., y<d>t-3, y<d>t-2, y<d>t-i, y<d>t) par les informations d'état estimées dans le cas où les informations d'état réelles n'ont pas été reçues en temps voulu ou reçues de manière erronée.

FIG 1

FIG 2

# FIG 3

EP 4 046 150 B1

## FIG 4

FIG 5

FIG 6

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005023742 A1
- DE 102017213350 A1

- EP 1252566 B1

**In der Beschreibung aufgeführte Nicht-Patentliteratur**

- *Verkehrsdatenanalyse in Sitraffic Scala/Concert, Das Expertensystem für Visualisierung, Qualitätsmanagement und Statistik,* 24. September 2019, https://www.mobility.siemens.com/mobility/ global/SiteCollectionDocuments/de/ road-Solutions/urban/ traffic-control-center/verkehrsdatenanalyse .pdf
- Missing traffic flow data prediction using least squares support vector machines in urban arterial streets. **YANG ZHANG et al.** COMPUTATIONAL INTELLIGENCE AND DATA MINING, 2009. CIDM '09.IEEE SYMPOSIUM ON. IEEE, 30. Marz 2009, 76-83
- **MOU LUNTIAN et al.** T-LSTM: A Long Short-term Memory Neural Network Enhanced by Temporal Information for Traffic Flow Prediction. *IEEE ACCESS,* vol. 7, 98053-98060

- *Sitraffic ESCoS, Das kooperative Verkehrssystem für die digitale Straße,* 24. September 2019, https://assets.new.Siemens.com/siemens/assets/api/uuid:c69aee 219197d72829174a2a8071fe51c 6bf89a4/Version:1499954508/sitraffic-escos-de.pdf
- **S. HAYKIN.** Neural Networks: A Comprehensive Foundation. Macmillan College Publishing Company, 1999, 732-789
- Modeling Dynamical Systems by Error Correction Neural Networks. **ZIMMERMANN HG. ; NEUNEIER R. ; GROTHMANN R.** Modelling and Forecasting Financial Data. Studies in Computational Finance. Springer, 2002, vol. 2